(19)

Europäisches
Patentamt

European
Patent Office

Office européen
des brevets

(11) **EP 3 968 651 A1**

(12) **EUROPEAN PATENT APPLICATION**
published in accordance with Art. 153(4) EPC

(43) Date of publication:
**16.03.2022 Bulletin 2022/11**

(21) Application number: **20913592.0**

(22) Date of filing: **04.12.2020**

(51) International Patent Classification (IPC):
*H04N 21/845* (2011.01)       *H04N 21/4402* (2011.01)

(52) Cooperative Patent Classification (CPC):
**H04N 21/2187; H04N 21/239; H04N 21/2662;**
**H04N 21/433; H04N 21/4402; H04N 21/472;**
**H04N 21/845**

(86) International application number:
**PCT/CN2020/133863**

(87) International publication number:
**WO 2021/143388 (22.07.2021 Gazette 2021/29)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **17.01.2020 CN 202010055756**

(71) Applicant: **Beijing Dajia Internet Information**
**Technology Co., Ltd.**
**Haidian District**
**Beijing 100085 (CN)**

(72) Inventor: **ZHOU, Chao**
**Beijing 100085 (CN)**

(74) Representative: **Yang, Shu**
**Withers & Rogers LLP**
**2 London Bridge**
**London SE1 9RA (GB)**

(54) **BITRATE SWITCHING METHOD AND DEVICE**

(57)    A method and device for switching a bit rate are provided in the present disclosure, which belongs to the technical field of media transmission. In the embodiments of the present disclosure, a media frame in a media stream is received; playback status information of the media stream is acquired; a target position is determined according to a position of the media frame in the media stream in response to that the playback status information meets a bit rate switching condition; and finally, a frame acquiring request is sent to a server based on the target position, such that the server returns media frames starting from the target position in the media stream based on a target bit rate.

**FIG. 2**

## Description

## CROSS-REFERENCE TO RELATED APPLICATION

The present application claims priority to Chinese Patent Application No. 202010055756.1, filed on January 17, 2020 and entitled "BITRATE SWITCHING METHOD, APPARATUS, DEVICE AND STORAGE MEDIUM", the entire contents of which are incorporated herein by reference.

## TECHNICAL FIELD

The present disclosure relates to technical field of media transmission, and in particular, to a method and device for switching a bit rate.

## BACKGROUND

With the development of media transmission technology, application scenarios of media transmission are becoming more complex. In the case of fluctuations in network bandwidth of a user, how to switch a downloading bit rate of media resources to ensure normal streaming transmission has attracted more attention. In the related art, media transmission is generally implemented by streaming transmission and chip transmission. However, the streaming transmission has a fixed bit rate, while the chip transmission has a large delay.

## SUMMARY

Embodiments of the present disclosure provide a method and device for switching a bit rate. The technical solutions are as follows.

According to a first aspect of the embodiments of the present disclosure, a method for switching a bit rate is provided, including: receiving a media frame in a media stream; acquiring playback status information of the media stream; determining a target position according to a position of the media frame in the media stream in response to that the playback status information meets a bit rate switching condition; and sending a frame acquiring request to a server based on the target position, wherein the frame acquiring request is used for instructing the server to return media frames starting from the target position in the media stream based on a target bit rate.

According to a second aspect of the embodiments of the present disclosure, a method for switching a bit rate is provided, including: sending a media frame in a media stream; acquiring playback status information of the media stream from a terminal; determining a target position according to a position of the media frame in the media stream in response to that the playback status information meets a bit rate switching condition; and sending media frames starting from the target position in the media stream to the terminal based on the target position and a target bit rate.

According to a third aspect of the embodiments of the present disclosure, an apparatus for switching a bit rate is provided, including an acquiring module, a determining module, and a sending module, wherein the acquiring module is configured to receive a media frame in a media stream, and acquire playback status information of the media stream; the determining module is configured to determine a target position according to a position of the media frame in the media stream in response to that the playback status information meets a bit rate switching condition; and the sending module is configured to send a frame acquiring request to a server based on the target position, wherein the frame acquiring request is used for instructing the server to return media frames starting from the target position in the media stream based on a target bit rate.

According to a fourth aspect of the embodiments of the present disclosure, a bit rate switching apparatus is provided, including an acquiring module, a determining module, and a sending module, wherein the acquiring module is configured to send a media frame in a media stream, and acquire playback status information of the media stream from a terminal; the determining module is configured to determine a target position according to a position of the media frame in the media stream in response to that the playback status information meets a bit rate switching condition; and the sending module is configured to send media frames starting from the target position in the media stream to the terminal based on the target position and a target bit rate.

According to a fifth aspect of the embodiments of the present disclosure, an electronic device is provided, including: at least one processor; and at least one memory configured to store instructions executable by the at least one processor, wherein the at least one processor is configured to execute the instructions to perform the following steps: receiving a media frame in a media stream; acquiring playback status information of the media stream; determining a target position according to a position of the media frame in the media stream in response to that the playback status information meets a bit rate switching condition; and sending a frame acquiring request to a server based on the target position, wherein the frame acquiring request is used for instructing the server to return media frames starting from the target position in the media stream based on a target bit rate.

According to a sixth aspect of the embodiments of the present disclosure, an electronic device is provided, including: at least one processor; and at least one memory configured to store instructions executable by the at least one processor, wherein the at least one processor is configured to execute the instructions to perform the following steps: sending a media frame in a media stream; acquiring playback status information of the media stream from a terminal; determining a target position according to a position of the media frame in the media stream in response to that the playback status information meets a bit rate switching condition; and sending media frames starting from the target position in the media stream to the terminal based on the target position and a target bit rate.

According to a seventh aspect of the embodiments of the present disclosure, a storage medium is provided, wherein when instructions in the storage medium are executed by a processor of an electronic device, the electronic device is caused to perform the following steps: receiving a media frame in a media stream; acquiring playback status information of the media stream; determining a target position according to a position of the media frame in the media stream in response to that the playback status information meets a bit rate switching condition; and sending a frame acquiring request to a server based on the target position, wherein the frame acquiring request is used for instructing the server to return media frames starting from the target position in the media stream based on a target bit rate.

According to an eighth aspect of the embodiments of the present disclosure, a storage medium is provided, wherein when instructions in the storage medium are executed by a processor of an electronic device, the electronic device is caused to perform the following steps: sending a media frame in a media stream; acquiring playback status information of the media stream from a terminal; determining a target position according to a position of the media frame in the media stream in response to that the playback status information meets a bit rate switching condition; and sending media frames starting from the target position in the media stream to the terminal based on the target position and a target bit rate.

According to a ninth aspect of the embodiments of the present disclosure, a computer program product is provided, including at least one instruction, wherein when the at least one instruction is executed by a processor of an electronic device, the electronic device is caused to perform the following steps: receiving a media frame in a media stream; acquiring playback status information of the media stream; determining a target position according to a position of the media frame in the media stream in response to that the playback status information meets a bit rate switching condition; and sending a frame acquiring request to a server based on the target position, wherein the frame acquiring request is used for instructing the server to return media frames starting from the target position in the media stream based on a target bit rate.

According to a tenth aspect of the embodiments of the present disclosure, a computer program product is provided, including at least one instruction, wherein when the at least one instruction is executed by a processor of an electronic device, the electronic device is caused to perform the following steps: sending a media frame in a media stream; acquiring playback status information of the media stream from a terminal; determining a target position according to a position of the media frame in the media stream in response to that the playback status information meets a bit rate switching condition; and sending media frames starting from the target position in the media stream to the terminal based on the target position and a target bit rate.

It should be understood that the above general description and the following detailed description are only exemplary and explanatory, and should not be construed as a limitation to the present disclosure.

**BRIEF DESCRIPTION OF THE DRAWINGS**

To describe the technical solutions in the embodiments of the present disclosure more clearly, the following briefly introduces the accompanying drawings required for describing the embodiments. Apparently, the accompanying drawings in the following description show merely some embodiments of the present application, and those of ordinary skill in the art may still derive other drawings from these accompanying drawings without creative efforts.

FIG. 1 is a schematic diagram of an implementation environment of a method for switching a bit rate according to an exemplary embodiment;
FIG. 2 is a flowchart of a method for switching a bit rate according to an exemplary embodiment;
FIG. 3 is a flowchart of a method for switching a bit rate according to an exemplary embodiment;
FIG. 4 is a flowchart of a method for switching a bit rate according to an exemplary embodiment;
FIG. 5 is a schematic diagram of a method for switching a bit rate according to an exemplary embodiment;
FIG. 6 is a flowchart of a method for switching a bit rate according to an exemplary embodiment;
FIG. 7 is a block diagram of an apparatus for switching a bit rate according to an exemplary embodiment;
FIG. 8 is a block diagram of an apparatus for switching a bit rate according to an exemplary embodiment;
FIG. 9 is a block diagram of a terminal according to an exemplary embodiment; and
FIG. 10 is a block diagram of a server according to an exemplary embodiment.

**DETAILED DESCRIPTION**

In order to make the objectives, technical solutions and advantages of the present disclosure clearer, implementations of the present disclosure will be further described in detail below in combination with the accompanying drawings.

To make those of ordinary skill in the art better understand the technical solutions of the present disclosure, the following clearly and completely describes the technical solutions in the embodiments of the present disclosure with reference to the accompanying drawings.

It should be noted that the terms "first", "second", and so on in the specification and claims of the present disclosure and in the accompanying drawings are intended to distinguish between similar objects but do not necessarily indicate a specific order or sequence. It should be understood that the data used in such a way may be exchanged under proper conditions to make it possible to implement the described embodiments of present disclosure in sequences except those illustrated or described herein. The implementations described in the following exemplary embodiments do not represent all implementations consistent with the present disclosure. On the contrary, they are only embodiments of an apparatus and a method detailed in the appended claims and consistent with some aspects of the present disclosure.

User information involved in the present disclosure may be information authorized by users or fully authorized by various parties.

The terms in the present disclosure are illustrated hereinafter.

I. Streaming media

Streaming media adopts a streaming method, which refers to a technology and process of compressing a sequence of multimedia resources and sending resource packets over the Internet, so as to transmit the multimedia resources in real time on the Internet for viewing. This technology allows resource packets to be sent like streaming water. Without this technology, the entire media file has to be downloaded before use, and the multimedia resources can only be watched offline. Streaming can deliver live multimedia resources or multimedia resources pre-stored on a server. When a viewer user is watching the multimedia resources, the multimedia resources can be played by specific playback software after reaching a viewer terminal of the viewer user.

II. FLV Adaptive Streaming (FAS)

FAS is a streaming resource transmission standard (also known as resource transmission protocol) proposed in the present disclosure. Unlike the traditional fragmentation-based media transmission method, the FAS standard can achieve frame-level multimedia resource transmission. Instead of waiting for a complete video to arrive before sending resource packets to the terminal, the server determines a target timestamp after parsing a frame acquiring request from a terminal; if the target timestamp is less than zero, the server packets all media frames already cached starting from the target timestamp and sends the media frames to the terminal (without fragmentation). Thereafter, if the target timestamp is greater than or equal to zero or there is a real-time stream in addition to the cached media frames, the server sends media frames of the multimedia resource to the terminal frame by frame. It should be noted that a target bit rate is specified in the frame acquiring request.

When the network bandwidth condition of the terminal changes, the terminal can adaptively adjust a to-be-switched bit rate, and resend a frame acquiring request corresponding to the to-be-switched bit rate, to achieve an effect of adaptively adjusting the bit rate of the multimedia resource. The FAS standard can achieve frame-level transmission and reduce end-to-end delay. A new frame acquiring request is sent only when the bit rate is switched, which greatly reduces the number of requests and reduces the communication overheads in the resource transmission process.

III. Live streaming and on-demand streaming

Live streaming: multimedia resources are recorded in real time, and an anchor user "pushes" a media stream (which means pushing a multimedia resource in a streaming manner) to a server through an anchor terminal, and a viewer user triggers, on a viewer terminal, to enter a live streaming interface of the anchor user, and then "pulls" the media stream (which means pulling the multimedia resource in a streaming manner) from the server to the viewer terminal. The viewer terminal decodes and plays the multimedia resource, to play the video in real time.

On-demand streaming: also known as Video On Demand (VOD). Multimedia resources are pre-stored on a server, and according to a requirement of a viewer user, the server can provide a multimedia resource specified by the viewer user. Specifically, a viewer terminal sends a VOD request to the server, and the server sends a multimedia resource to the viewer terminal after querying the multimedia resource specified in the VOD request, that is, the viewer user can selectively play a particular multimedia resource.

Intuitively, it is possible to control playback progress of content of VOD arbitrarily, but not content of live streaming, wherein the playback speed of the live streaming content depends on the real-time live streaming progress of the anchor user.

The implementation environment of the method for switching a bit rate provided in the embodiments of the present disclosure are described below.

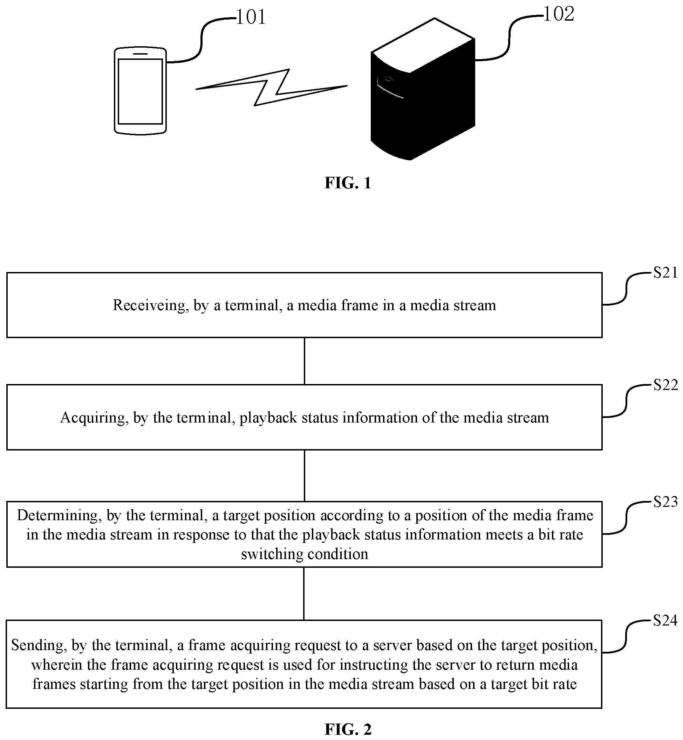

FIG. 1 is a schematic diagram of an implementation environment of a method for switching a bit rate according to an exemplary embodiment. Referring to FIG. 1, the implementation environment includes: a terminal 101 and a server 102. The terminal 101 is connected to the server 102 via a wired network or a wireless network.

The terminal 101 may be at least one of: a smartphone, a game console, a desktop computer, a tablet computer, an e-reader, a Moving Picture Experts Group Audio Layer III (MP3) player, a Moving Picture Experts Group Audio Layer IV (MP4) player, a laptop computer, etc. For example, the terminal 101 is a terminal used by a user, and the user may use the terminal 101 to acquire a media stream of different bit rates from the server 102.

The server 102 may be at least one of: a server, a plurality of servers, a cloud computing platform, and a virtualization center. The server 102 is configured to provide a backend service for an application program that supports media transmission. In some embodiments, in the process of media transmission, the server 102 and the terminal 101 can cooperate with each other. For example, the server 102 is configured to provide a media stream of different bit rates to the terminal 101. The terminal 101 is configured to request a media stream of different bit rates from the server 102.

The terminal 101 may generally refer to one of a plurality of terminals, or a set consisting of a plurality of terminals. The server 102 may generally refer to one of a plurality of servers, or a set consisting of a plurality of servers. It should be understood that, if the terminal 101 or the server 102 is a set of devices, although not shown in FIG. 1, the implementation environment further includes other terminals and other servers. The quantity and the device type of each device are not limited in the embodiments of the present disclosure.

The hardware embodiment of the embodiments of the present disclosure is described above, and the method process provided in the embodiments of the present disclosure is illustrated below.

FIG. 2 is a flowchart of a method for switching a bit rate according to an exemplary embodiment. The method may be applied to an electronic device. In this embodiment, the electronic device being a terminal is used as an example for description, and the method includes the following steps:

S21, the terminal receives a media frame in a media stream.

S22, the terminal acquires playback status information of the media stream.

S23, the terminal determines a target position according to a position of the media frame in the media stream in response to that the playback status information meets a bit rate switching condition.

S24, the terminal sends a frame acquiring request to a server based on the target position, wherein the frame acquiring request is used for instructing the server to return media frames starting from the target position in the media stream based on a target bit rate.

In some embodiments, the playback status information includes a first cache volume; the bit rate switching condition includes that the first cache volume is greater than a first cache volume threshold or that the first cache volume is less than a second cache volume threshold, wherein the first cache volume is a current cache volume of the media stream that has been cached but not played, and the second cache volume threshold is less than the first cache volume threshold.

In some embodiments, the playback status information includes at least one of freeze information or a frame loss rate in a playback process of the media stream; the freeze information includes at least one of: the number of freezes within a target time period during a playback of the media stream, a last freeze time or last freeze duration; the bit rate switching condition includes any one of: the number of freezes is greater than a freeze count threshold or the number of freezes is less than a freeze count threshold; duration between the last freeze time and a current moment is less than an interval threshold and the freeze duration is greater than a duration threshold, or the duration between the last freeze time and the current moment is greater than an interval threshold and the freeze duration is less than a duration threshold; the last freeze duration is greater than a duration threshold, or the last freeze duration is less than a duration threshold; the frame loss rate is greater than a first frame loss rate threshold; the frame loss rate is less than a second frame loss rate threshold, wherein the second frame loss rate threshold is less than the first frame loss rate threshold; the frame loss rate within the target time period is greater than the first frame loss rate threshold; and the frame loss rate within the target time period is less than the second frame loss rate threshold.

In some embodiments, the step of sending a frame acquiring request to a server based on the target position includes: sending the frame acquiring request to the server based on the target position in response to that the target bit rate being not equal to a current bit rate.

In some embodiments, the step of determining a target position according to a position of the media frame in the media stream in response to that the playback status information meets a bit rate switching condition includes: determining the target bit rate according to the playback status information and a current bit rate in response to that the playback status information meets the bit rate switching condition; and determining the target position according to the position of the media frame in the media stream in response to that the target bit rate being not equal to the current bit rate.

In some embodiments, the method further includes: discarding the playback status information in response to that the target bit rate being equal to the current bit rate.

In some embodiments, the step of determining the target position according to the position of the media frame in the media stream in response to that the target bit rate being not equal to the current bit rate includes: determining a position of a first media frame in a target media frame group as the target position in response to that the target bit rate being not equal to the current bit rate, wherein the target media frame group is a media frame group in which the media frame is located.

In some embodiments, the step of determining the target bit rate according to the playback status information and a current bit rate includes: acquiring a plurality of candidate bit rates; acquiring a second cache volume corresponding to each candidate bit rate according to a relationship between the plurality of candidate bit rates and the current bit rate, the playback status information, and a position of the media frame of the media stream in a target media frame group, wherein the target media frame group is a media frame group in which the media frame is located; and determining the target bit rate from the plurality of candidate bit rates according to a relationship between the second cache volume corresponding to each candidate bit rate and the first cache volume threshold or the second cache volume threshold, wherein the second cache volume corresponding to each candidate bit rate is a cache volume of the media stream that has been cached but not played at the end of transmission of the target media frame group, after a bit rate is switched to the candidate bit rate.

In some embodiments, the step of acquiring a second cache volume corresponding to each candidate bit rate according to a relationship between the plurality of candidate bit rates and the current bit rate, the playback status information, and a position of the media frame of the media stream in a target media frame group includes: acquiring a cache increment for the media stream at the end of transmission of the target media frame group according to the position of the media frame of the media stream in the target media frame group; determining a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates; and acquiring the second cache volume corresponding to each candidate bit rate according to the first cache volume in the playback status information, the cache increment, and the playback volume, wherein the first cache volume is a current cache volume of the media stream that has been cached but not played.

In some embodiments, the step of determining a playback volume of the media stream in a target cache process according to a cache position corresponding to the relationship between the plurality of candidate bit rates and the current bit rate includes: determining a cache position for continuing to cache the target media frame group according to the relationship between the plurality of candidate bit rates and the current bit rate; acquiring current network status information; and determining the playback volume of the media stream in the target cache process according to the current network status information, the cache position, a length of the target media frame group and the plurality of candidate bit rates.

In some embodiments, the cache position is a position of a media frame next to the media frame in response to that any candidate bit rate being equal to the current bit rate; or the cache position is a position of a first media frame of the target media frame group in response to that any candidate bit rate being not equal to the current bit rate.

In some embodiments, the current first cache volume of the media stream that has been cached but not played is greater than the first cache volume threshold; and the step of determining the target bit rate from the plurality of candidate bit rates according to a relationship between the second cache volume corresponding to each candidate bit rate and the first cache volume threshold or the second cache volume threshold includes: determining, in response to that at least one second cache volume in the second cache volumes corresponding to the plurality of candidate bit rates being greater than the first cache volume threshold, a candidate bit rate corresponding to a maximum of the at least one second cache volume as the target bit rate, wherein the target bit rate is greater than or equal to the current bit rate; or determining the current bit rate as the target bit rate in response to that no second cache volume in the second cache volumes corresponding to the plurality of candidate bit rates being greater than the first cache volume threshold, wherein the target bit rate is greater than or equal to the current bit rate.

In some embodiments, the current first cache volume of the media stream that has been cached but not played is less than the second cache volume threshold; and the step of determining the target bit rate from the plurality of candidate bit rates according to a relationship between the second cache volume corresponding to each candidate bit rate and the first cache volume threshold or the second cache volume threshold includes: determining, in response to that at least one second cache volume in the second cache volumes corresponding to the plurality of candidate bit rates being greater than the second cache volume threshold, a candidate bit rate corresponding to a maximum of the at least one second cache volume as the target bit rate, wherein the target bit rate is less than or equal to the current bit rate; or determining a candidate bit rate corresponding to a maximum second cache volume in the second cache volumes corresponding to the plurality of candidate bit rates as the target bit rate in response to that no second cache volume in the second cache volumes corresponding to the plurality of candidate bit rates being greater than the second cache volume threshold, wherein the target bit rate is less than or equal to the current bit rate.

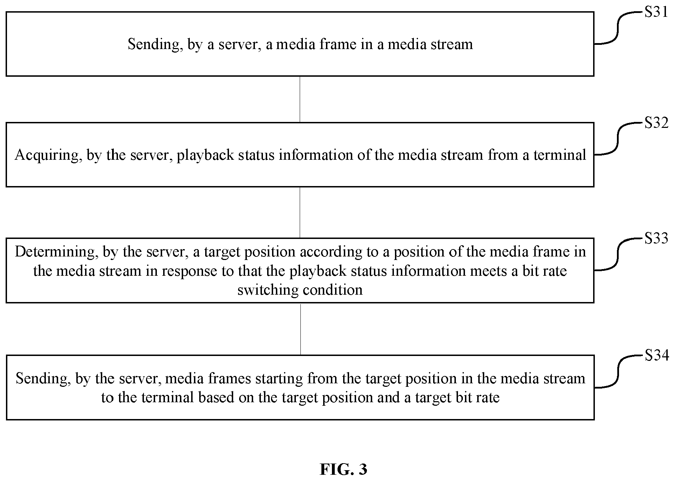

FIG. 3 is a flowchart of a method for switching a bit rate according to an exemplary embodiment. The method is applied to an electronic device. In this embodiment, the electronic device being a server is used as an example for description, and the method includes the following steps:

S31, the server sends a media frame in a media stream.
S32, the server acquires playback status information of the media stream from a terminal.
S33, the server determines a target position according to a position of the media frame in the media stream in response to that the playback status information meets a bit rate switching condition.

S34, the server sends media frames starting from the target position in the media stream to the terminal based on the target position and a target bit rate.

In some embodiments, the playback status information includes a first cache volume; the bit rate switching condition includes that the first cache volume is greater than a first cache volume threshold or that the first cache volume is less than a second cache volume threshold, wherein the first cache volume is a current cache volume of the media stream that has been cached but not played, and the second cache volume threshold is less than the first cache volume threshold.

In some embodiments, the playback status information includes at least one of freeze information or a frame loss rate in a playback process of the media stream; the freeze information includes at least one of: the number of freezes within a target time period during a playback of the media stream, a last freeze time or last freeze duration; the bit rate switching condition includes any one of: the number of freezes is greater than a freeze count threshold or the number of freezes is less than a freeze count threshold; duration between the last freeze time and a current moment is less than an interval threshold and the last freeze duration is greater than a duration threshold, or the duration between the last freeze time and the current moment is greater than an interval threshold and the last freeze duration is less than a duration threshold; the last freeze duration is greater than a duration threshold, or the last freeze duration is less than a duration threshold; the frame loss rate is greater than a first frame loss rate threshold; the frame loss rate is less than a second frame loss rate threshold, wherein the second frame loss rate threshold is less than the first frame loss rate threshold; the frame loss rate within the target time period is greater than the first frame loss rate threshold; and the frame loss rate within the target time period is less than the second frame loss rate threshold.

In some embodiments, the step of determining a target position according to a position of the media frame in the media stream in response to that the playback status information meets a bit rate switching condition includes: determining the target bit rate according to the playback status information and a current bit rate in response to that the playback status information meets the bit rate switching condition; and determining the target position according to the position of the media frame in the media stream in response to that the target bit rate being not equal to the current bit rate.

In some embodiments, the method further includes: continuing to transmit a media frame next to the media frame to the terminal based on the current bit rate in response to that the target bit rate being equal to the current bit rate.

In some embodiments, the step of determining the target position according to the position of the media frame in the media stream in response to that the target bit rate being not equal to the current bit rate includes: determining a position of a first media frame in a target media frame group as the target position in response to that the target bit rate being not equal to the current bit rate, wherein the target media frame group is a media frame group in which the media frame is located.

In some embodiments, the step of determining the target bit rate according to the playback status information and a current bit rate includes: acquiring a plurality of candidate bit rates; acquiring a second cache volume corresponding to each candidate bit rate according to a relationship between the plurality of candidate bit rates and the current bit rate, the playback status information, and a position of the media frame of the media stream in a target media frame group, wherein the target media frame group is a media frame group in which the media frame is located; and determining the target bit rate from the plurality of candidate bit rates according to a relationship between the second cache volume corresponding to each candidate bit rate and the first cache volume threshold or the second cache volume threshold, wherein the second cache volume corresponding to each candidate bit rate is a cache volume of the media stream that has been cached but not played at the end of transmission of the target media frame group, after a bit rate is switched to the candidate bit rate.

In some embodiments, the step of acquiring a second cache volume corresponding to each candidate bit rate according to a relationship between the plurality of candidate bit rates and the current bit rate, the playback status information, and a position of the media frame of the media stream in a target media frame group includes: acquiring a cache increment for the media stream at the end of transmission of the target media frame group according to the position of the media frame of the media stream in the target media frame group; determining a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates; and acquiring the second cache volume corresponding to each candidate bit rate according to the first cache volume in the playback status information, the cache increment, and the playback volume, wherein the first cache volume is a current cache volume of the media stream that has been cached but not played.

In some embodiments, the step of determining a playback volume of the media stream in a target cache process according to a cache position corresponding to the relationship between the plurality of candidate bit rates and the current bit rate includes: determining a cache position for continuing to cache the target media frame group according to the relationship between the plurality of candidate bit rates and the current bit rate; acquiring current network status information; and determining the playback volume of the media stream in the target cache process according to the current network status information, the cache position, a length of the target media frame group and the plurality of candidate bit rates.

In some embodiments, the cache position is a position of a media frame next to the media frame in response to that any candidate bit rate being equal to the current bit rate; or the cache position is a position of a first media frame of the target media frame group in response to that any candidate bit rate being not equal to the current bit rate.

In some embodiments, the current first cache volume of the media stream that has been cached but not played is greater than the first cache volume threshold; and the step of determining the target bit rate from the plurality of candidate bit rates according to a relationship between the second cache volume corresponding to each candidate bit rate and the first cache volume threshold or the second cache volume threshold includes: determining, in response to that at least one second cache volume in the second cache volumes corresponding to the plurality of candidate bit rates being greater than the first cache volume threshold, a candidate bit rate corresponding to a maximum of the at least one second cache volume as the target bit rate, wherein the target bit rate is greater than or equal to the current bit rate; or determining the current bit rate as the target bit rate in response to that no second cache volume in the second cache volumes corresponding to the plurality of candidate bit rates being greater than the first cache volume threshold, wherein the target bit rate is greater than or equal to the current bit rate.

In some embodiments, the current first cache volume of the media stream that has been cached but not played is less than the second cache volume threshold; and the step of determining the target bit rate from the plurality of candidate bit rates according to a relationship between the second cache volume corresponding to each candidate bit rate and the first cache volume threshold or the second cache volume threshold includes: determining, in response to that at least one second cache volume in the second cache volumes corresponding to the plurality of candidate bit rates being greater than the second cache volume threshold, a candidate bit rate corresponding to a maximum of the at least one second cache volume as the target bit rate, wherein the target bit rate is less than or equal to the current bit rate; or determining a candidate bit rate corresponding to a maximum second cache volume in the second cache volumes corresponding to the plurality of candidate bit rates as the target bit rate in response to that no second cache volume in the second cache volumes corresponding to the plurality of candidate bit rates being greater than the second cache volume threshold, wherein the target bit rate is less than or equal to the current bit rate.

The method embodiment provided in the embodiments of the present disclosure has been described from the perspective of the terminal and the perspective of the server. In the following, the embodiments of the present disclosure are illustrated through another method embodiment from the perspective of interaction between the terminal and the server.

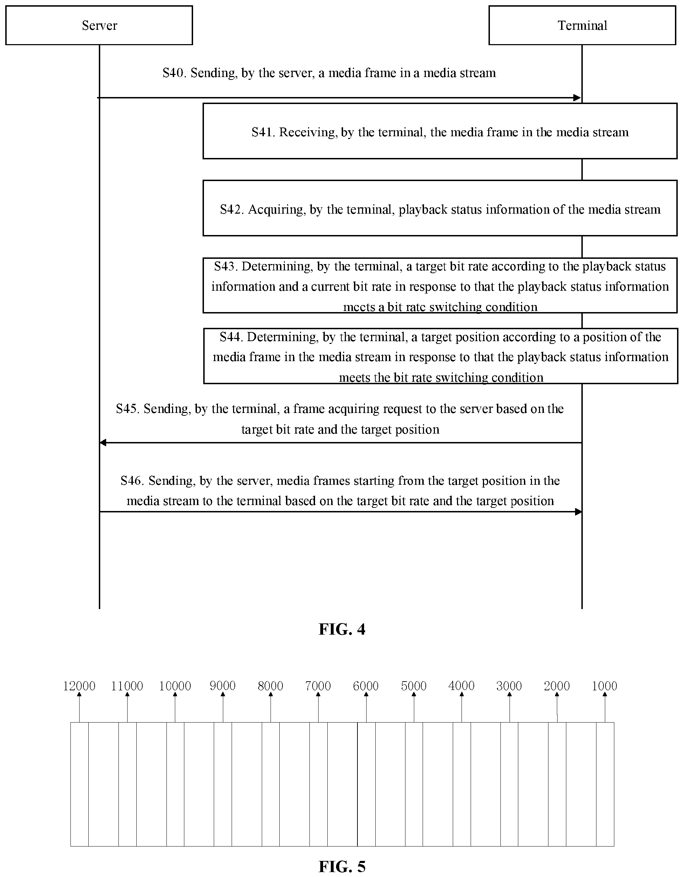

FIG. 4 is a flowchart of a method for switching a bit rate according to an exemplary embodiment. Referring to FIG. 4, the method includes the following steps:

S40, the server sends a media frame in a media stream.
S41, the terminal receives the media frame in the media stream.

The terminal may be a terminal used by a user. The terminal may be connected to the server via a wired network or a wireless network. The server may be configured to provide a media stream of a plurality of bit rates. The media stream may include a plurality of media frames. The media frame may be an audio frame or an image frame. The plurality of media frames may be obtained by sampling an original media resource. When receiving the media stream, the terminal may continuously acquire a plurality of media frames in the media stream and then play the acquired media frames, to implement transmission and playback of the media stream.

Specifically, the terminal may be connected to the server via a wired network or a wireless network. The server may be configured to provide a media stream of a plurality of bit rates, and can send the media stream to the terminal at different bit rates. The media stream may include a plurality of media frames. The media frame may be an audio frame or an image frame. The plurality of media frames may be obtained by sampling an original media resource. The terminal may continuously acquire a plurality of media frames in the media stream and then play the acquired media frames, to implement transmission and playback of the media stream.

An application program may be installed on the terminal. The application program is used for browsing media streams. For example, the application program may include at least one of: a short video application, a live streaming application, a video-on-demand application, a social application, a shopping application, etc. The embodiments of the present disclosure do not specifically limit the type of the application.

The media stream in the embodiments of the present disclosure includes, but is not limited to, at least one of: video resource, audio resource, image resource, or text resource, and the embodiments of the present disclosure do not specifically limit the type of the media stream. For example, the media stream is a live video stream of a network anchor, or a historical on-demand video pre-stored on a server, or a live audio stream of a radio anchor, or a historical on-demand audio pre-stored on a server.

In the foregoing process, a user can start the application program on the terminal to display a resource push interface. For example, the resource push interface may be a home page or a functional interface of the application program. The embodiments of the present disclosure do not specifically limit the type of the resource push interface. The resource push interface includes thumbnail information of at least one media stream. The thumbnail information includes at least one of: a title, an introduction, a poster, a trailer, or a highlight clip of the media stream. In the process of browsing the resource push interface, the user may click on the thumbnail information of a media stream of interest. In response to the user's touch operation on the thumbnail information of the media stream, the terminal may be redirected from the resource push interface to a resource playback interface.

S42, the terminal acquires playback status information of the media stream.

The terminal receives the media frame in the media stream, and may acquire the playback status information of the media stream. The playback status information may be used for determining whether it is necessary to switch a transmission bit rate of the media stream. It should be noted that, in S40 and S41 above, the media frame transmitted between the server and the terminal may be any media frame in the media stream. In other words, the terminal may start performing the steps of switching a bit rate at any time point during transmission of the media stream. Said any time point may be determined according to service requirements, such that the terminal may automatically start performing the steps of switching a bit rate at fixed time intervals, or the technician may manually control the terminal to perform the steps of switching a bit rate, which is not limited in the present disclosure.

In some other embodiments, the playback status information of the media stream may be acquired by the server. The server may acquire the playback status information of the media stream on the terminal in the process of sending the media stream, thereby determining, for the terminal, whether the steps of switching a bit rate needs to be provided.

It should be noted that, the method for switching a bit rate provided in the present disclosure may be applied to a live streaming scenario or a video-on-demand scenario. The terminal may request the media stream from the server, or from an anchor through the server.

S43, the terminal determines a target bit rate according to the playback status information and a current bit rate in response to that the playback status information meets a bit rate switching condition.

The playback status information can represent the playback status of the media stream on the terminal. When the playback status information meets the bit rate switching condition, the terminal may make a response, determine a target bit rate that can optimize a playback effect of the media stream, and switch the bit rate to the target bit rate.

The bit rate is adjusted to be a bit rate corresponding to current network bandwidth information through the adaptation function. During the adaptive adjustment process, in addition to the current network bandwidth information, the playback status information of the terminal may also be taken into consideration to dynamically select a target bit rate with an optimal playback effect, thereby achieving a compromise among a freeze rate, clarity and smoothness of media streaming.

In some embodiments, after determining the target bit rate, the terminal may acquire address information of the media stream corresponding to the target bit rate, that is, target address information. Correspondingly, the terminal may trigger a frame acquiring instruction. The frame acquiring instruction may be used for instructing the terminal to determine, from address information of the media stream with a plurality of bit rates in a media presentation description of the media stream, the target address information of the media stream with the target bit rate, to provide a basis for the transmission of the media stream according to the target address information. The determining process of the bit rate switching and the process of acquiring the target bit rate are described in detail below.

In some embodiments, the playback status information includes a first cache volume, and the first cache volume is a current cache volume of the media stream that has been cached but not played. The bit rate switching condition includes that the first cache volume is greater than a first cache volume threshold or that the first cache volume is less than a second cache volume threshold, wherein the second cache volume threshold is less than the first cache volume threshold. That is, in these embodiments, there are two bit rate switching conditions. The first condition is that the first cache volume is greater than the first cache volume threshold. The second condition is that the first cache volume is less than the second cache volume threshold.

When the playback status information meets either of the two bit rate switching conditions, the terminal may determine the target bit rate according to the playback status information and the current bit rate. That is, in response to that the first cache volume is greater than the first cache volume threshold, the terminal may determine the target bit rate according to the playback status information and the current bit rate; or in response to that the first cache volume is less than the second cache volume threshold, the terminal determines the target bit rate according to the playback status information and the current bit rate.

After obtaining media frames of the media stream, the terminal may cache the obtained media frames, and when the media frames need to be played, the terminal may decode the cached media frames and play the media frames in chronological order. The first cache volume may be measured by using the duration of the media stream that has been cached but not played. For example, if the terminal has cached 1000 milliseconds (ms) of the media stream and played 400 ms of the media stream, the first cache volume is 600 ms.

For the different bit rate switching conditions, the step of determining a target bit rate according to the playback status information and a current bit rate in response to that the playback status information meets a bit rate switching condition may include the following two cases:

Case 1: In response to that the first cache volume is greater than the first cache volume threshold, the terminal may determine the target bit rate according to the playback status information and the current bit rate, wherein the target bit rate is greater than or equal to the current bit rate

In Case 1, the first cache volume is greater than the first cache volume threshold, indicating that the terminal's current cache volume of the media stream that has been cached but not played can ensure smooth playback of the media stream, while a higher bit rate of the media stream makes the media stream clearer. Therefore, a downloading bit rate of the media stream may be increased.

Case 2: In response to that the first cache volume is less than the second cache volume threshold, the terminal may determine the target bit rate according to the playback status information and the current bit rate, wherein the target bit rate is less than or equal to the current bit rate.

The second cache volume threshold is less than the first cache volume threshold. The first cache volume threshold and the second cache volume threshold may be cache volume thresholds set in advance, or may be cache volume thresholds set temporarily.

In Case 2, when the first cache volume is less than the second cache volume threshold, it indicates that the terminal's current cache volume of the media stream that has been cached but not played cannot ensure smooth playback of the media stream. With a lower bit rate of the media stream, the terminal can cache more volume of the media stream within the same period of time, which increases the cache and also makes the playback of the media stream smoother. Therefore, the downloading bit rate of the media stream may be reduced.

In addition to the relationships shown in the two cases above, the relationship between the first cache volume and the first cache volume threshold or the second cache volume threshold may include another possible case: the first cache volume is less than or equal to the first cache volume threshold and greater than or equal to the second cache volume threshold. In this case, it indicates that the terminal's current cache volume of the media stream that has been cached but not played just meets the playback requirement of the media stream, and the downloading bit rate of the media stream may not be changed in this case.

For example, the first cache volume threshold may be denoted by $q_h$, and the second cache volume threshold may be denoted by $q_l$, and the first cache volume may be denoted by $q_c$. When $q_c > q_h$, the media stream is unlikely to freeze during playback, and in this case, the bit rate of the media stream may be increased; when $q_c < q_h$, the media stream is likely to freeze during playback, and in this case, the bit rate of the media stream may be reduced.

In some embodiments, by setting the two thresholds, the first cache volume is compared with the first cache volume threshold and the second cache volume threshold, to determine whether to switch the bit rate of the media stream accordingly, thereby quickly learning the current playback effect of the media stream. When the first cache volume is greater than the first cache volume threshold or less than the second cache volume threshold, the terminal may perform the steps of switching a bit rate. However, after the bit rate switching, normal playback of the media stream cannot be necessarily ensured when the terminal receives the media stream at the target bit rate. Therefore, when the target bit rate is determined, the second cache volume may be compared with the two thresholds, to determine whether the playback condition of the media stream will be improved after the bit rate switching.

In some embodiments, the process of determining the target bit rate may include: determining playback effects corresponding to a plurality of candidate bit rates, and then acquiring a candidate bit rate with an optimal playback effect from the plurality of candidate bit rates as the target bit rate. Specifically, the terminal may acquire a plurality of candidate bit rates, acquire a second cache volume corresponding to each candidate bit rate according to a relationship between the plurality of candidate bit rates and the current bit rate, the playback status information, and a position of the media frame of the media stream in a target media frame group, and determine the target bit rate from the plurality of candidate bit rates according to a relationship between the second cache volume corresponding to each candidate bit rate and the first cache volume threshold or the second cache volume threshold. The target media frame group is a media frame group in which the media frame is located.

The server may cache a media stream with a plurality of bit rates, and the plurality of candidate bit rates are the plurality of bit rates of the media stream that the server can provide. The media stream may include a plurality of media frame groups. The length of each media frame group may be preset according service requirements, or may be set by a technician temporarily, which is not limited in the present disclosure. Each media frame group may include a plurality of media frames. The plurality of media frames may be arranged in chronological order. The position of the media frame of the media stream in the target media frame group may be denoted by duration it takes for the terminal to play from the first frame of the target media frame group to the media frame. The second cache volume corresponding to each candidate bit rate is playback duration of the media stream that has been cached but not played at the end of transmission of the target media frame group, after the bit rate is switched to the candidate bit rate. By comparing the second cache volume corresponding to each candidate bit rate with the first cache volume threshold and the second cache volume threshold, the playback effect after the bit rate switching can be determined, thereby screening out a candidate bit rate that can be used as the target bit rate.

For example, the server may cache a media stream with n bit rates, and the plurality of candidate bit rates may include $r_1$, $r_2$, ...$r_n$. The length of the target media frame group may be $D$. Duration it takes to play from the first frame in the target media frame group to the media frame may be $d$, and $d$ may represent the position of the media frame in the target media frame group. In addition, $q_n$ represents the second cache volume corresponding to the $n^{th}$ candidate bit rate. $D$ and $d$ are positive numbers, and n is a positive integer.

A method for determining the target bit rate is provided by acquiring a plurality of candidate bit rates, acquiring a second cache volume corresponding to each candidate bit rate according to the relationship between plurality of candidate bit rates and the current bit rate, the playback status information and the position of the media frame of the media stream in the target media frame group, and then determining the target bit rate according to the relationship between the second cache volume corresponding to each bit rate and the first cache volume threshold or the second cache volume threshold, thus providing a basis for bit rate switching of the terminal.

In some embodiments, the process of acquiring the second cache volume may be as follows: the terminal may acquire a cache increment for the media stream at the end of transmission of the target media frame group according to the position of the media frame of the media stream in the target media frame group. The terminal determines a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates. Then, the terminal acquires the second cache volume corresponding to each candidate bit rate according to the first cache volume in the playback status information, the cache increment, and the playback volume, wherein the first cache volume is a current cache volume of the media stream that has been cached but not played.

The position of the media frame in the target media frame group may be denoted by duration it takes for the terminal to play from the first frame of the target media frame group to the media frame, for example, the duration may be in the unit of ms. The terminal uses the playback duration of the media stream cached within the target time period as the cache increment, wherein the target time period is a period of time from the moment of receiving the media frame to the moment at which transmission of the target media frame group is finished. For example, after receiving the media frame, the terminal caches 10 media frames within the target time period, and thus all the media frames in the target media frame group have been received and cached. The time it takes to play the 10 media frames cached within the target time period is the cache increment.

It takes time for the terminal to acquire the media stream corresponding to the cache increment. While acquiring the media stream corresponding to the cache increment, the terminal is still playing the cached media stream, and within this period of time, the duration of the media stream played by the terminal is the playback volume. The terminal acquires the second cache volume corresponding to each candidate bit rate according to the first cache volume, the cache increment, and the playback volume. The second cache volumes corresponding to the plurality of candidate bit rates can represent the playback duration of the media stream that has been cached but not played at the end of transmission of the current target media frame group, after the terminal switches the bit rate to the plurality of candidate bit rates. That is, the second cache volume corresponding to each candidate bit rate is a cache volume of the media stream that has been cached but not played at the end of transmission of the target media frame group, after the bit rate is switched to the candidate bit rate.

For example, the second cache volume may be expressed by the following formula:

$$q_n = q_c + D - d - q_b$$

wherein $q_c$ is the first cache volume, $q_b$ is the playback volume, $q_n$ is the second cache volume corresponding to the $n^{th}$ candidate bit rate. $D$ is the length of the target media frame group, $d$ is the duration it takes to play from the first frame in the target media frame group to the media frame, and correspondingly, $D-d$ can represent the cache increment.

The second cache volume corresponding to each candidate bit rate can be obtained by acquiring the cache increment and the playback volume and then combining them with the acquired first cache volume. A method for acquiring the second cache volume is provided, which provides a basis for subsequently determining the target bit rate according to the relationship between the second cache volume and the first cache volume threshold or the second cache volume threshold.

In some embodiments, during acquisition of the playback volume, current network status information may further be used as a reference to determine the time it takes to finish caching the target media frame group and determine the cache volume that can be played within the period of time. Specifically, the terminal may determine a cache position for continuing to cache the target media frame group according to the relationship between the plurality of candidate bit rates and the current bit rate, acquire current network status information, and determine the playback volume of the media stream in the target cache process according to the current network status information, the cache position, a length of the target media frame group, and the plurality of candidate bit rates.

The playback volume is the duration of the media stream that is played by the terminal in the target time period during which the terminal acquires the cache increment. It can be learned that the playback volume is related to the speed at which the terminal acquires the media stream in the target time period, that is, related to a network status of the terminal. The media stream acquired in the target time period is the media stream corresponding to the cache increment. Correspondingly, the terminal may acquire current network information, which may include an average bandwidth of the terminal within a period of time close to the current moment.

The cache position from which the terminal continues to cache the target media frame group is related to the relationship between the candidate bit rate and the current bit rate. The cache position is a position of a media frame next to the media frame in response to that any candidate bit rate being equal to the current bit rate. The cache position is a position of a first media frame of the target media frame group in response to that any candidate bit rate being not equal to the current bit rate.

That is, when the candidate bit rate is equal to the current bit rate, the terminal does not need to switch the bit rate, and may continue to cache the target media frame group starting from a frame next to the media frame. When the candidate bit rate is different from the current bit rate, to prevent the terminal from generating an error when decoding the media frame, the terminal may cache the target media frame group starting from the first frame of the target media frame group. After the cache position from which the terminal continues to cache the target media frame group, the terminal can determine the playback volume in the target cache process with reference to the acquired current network status information, the length of the target media frame group, and the plurality of candidate bit rates. The target cache process is a process from a current moment to the end of transmission of the target media frame group based on the plurality of candidate bit rates.

For example, the second cache volume may be expressed by the following formula:
When

$$r_n = r_c, \ q_n = q_c + D - d - (D-d) * r_c * 8/B.$$

When

$$r_n \neq r_c, \ q_n = q_c + D - d - D * r_n * 8/B.$$

wherein $r_c$ is the current bit rate, $r_n$ is an $n^{th}$ candidate bit rate, $q_n$ is a second cache volume corresponding to the $n^{th}$ candidate bit rate, $q_c$ is the first cache volume, $D$ is the length of the target media frame group, $d$ is the duration it takes to play from the first frame of the target media frame group to the media frame, $B$ is an average bandwidth of the terminal in a period of time close to the current moment, and $D-d$ can represent the cache increment. When the candidate bit rate is the same as the current bit rate, the terminal does not need to switch the bit rate, and may continue to cache the target media frame group starting from a frame next to the media frame. Correspondingly, $(D-d) * r_c * 8/B$ can represent the playback volume. When the candidate bit rate is different from the current bit rate, the terminal may cache the target media frame group starting from the first frame of the target media frame group; correspondingly, $D * r_n * 8/B$ can represent the playback volume.

For the average bandwidth, the average bandwidth $B$ of the terminal in a period of time close to the current moment can further be obtained based on the following formula:

$$B = S * 8/T$$

wherein $S$ is a data amount of the media stream downloaded by the terminal in the period of time close to the current moment, and $T$ is the period of time close to the current moment; for example, $T$ may be 500 ms.

The cache position for continuing to cache the target media frame group is determined, and the current network status information is acquired, so as to determine the playback volume of the media stream in the target cache process according to the current network status information in combination with the length of the target media frame group as well as the plurality of candidate bit rates. Thus, a method for obtaining the playback volume is provided.

In some embodiments, for Case 1 above, the terminal may determine, in response to that at least one second cache volume in the second cache volumes corresponding to the plurality of candidate bit rates being greater than the first cache volume threshold, a maximum candidate bit rate in the at least one candidate bit rate corresponding to the at least one second cache volume as the target bit rate. The terminal may also determine the current bit rate as the target bit rate in response to that no second cache volume in the second cache volumes corresponding to the plurality of candidate bit rates being greater than the first cache volume threshold.

For Case 1 above, the first cache volume is greater than the first cache volume threshold, that is, the terminal's current cache volume of the media stream that has been cached but not played can ensure smooth playback of the media stream, and in this case, the downloading bit rate of the media stream may be increased.

When at least one second cache volume in the second cache volumes corresponding to the plurality of candidate bit rates is greater than the first cache volume threshold, the at least one candidate bit rate corresponding to the at least one second cache volume can ensure normal playback of the media stream. Correspondingly, the terminal may determine a maximum candidate bit rate in the at least one candidate bit rate corresponding to the at least one second cache volume as the target bit rate, and the candidate bit rate may be greater than the current bit rate.

When no second cache volume in the second cache volumes corresponding to the plurality of candidate bit rates is greater than the first cache volume threshold, it indicates that among the plurality of candidate bit rates, no bit rate can ensure normal playback of the media stream while enhancing the clarity of the media stream. Therefore, the terminal may determine the current bit rate as the target bit rate, and continue to cache the media stream at the current bit rate.

For example, the current bit rate may be denoted by $r_c$, the target bit rate is denoted by $r$, the $n^{th}$ candidate bit rate may be denoted by $r_n$, the second cache volume corresponding to the $n^{th}$ candidate bit rate may be denoted by $q_n$, and the first cache volume threshold may be denoted by $q_h$. If for any $r_n > r_c$, $q_n > q_h$ *is invalid, then $r = r_c$*. If for any $r_n > r_c$, $q_n > q_h$ can be valid, then a maximum $r_n$ value among all $r_n$ values that satisfy $q_n > q_h$ is used as the target bit rate.

The maximum candidate bit rate in the at least one candidate bit rate corresponding to the at least one second cache volume greater than the first cache volume threshold is determined as the target bit rate, or the current bit rate is determined as the target bit rate.

In some embodiments, for Case 1 above, when at least one second cache volume in the second cache volumes corresponding to the plurality of candidate bit rates is greater than the first cache volume threshold, the terminal may determine a minimum candidate bit rate in the at least one candidate bit rate, which is greater than the current bit rate, corresponding to the at least one second cache volume as the target bit rate.

Each candidate bit rate in the at least one candidate bit rate, which is greater than the current bit rate, corresponding to the at least one second cache volume can ensure normal playback of the media stream while enhancing the clarity of the media stream, and a minimum bit rate is selected as the target bit rate.

In some embodiments, for Case 2 above, the terminal may determine, in response to that at least one second cache volume in the second cache volumes corresponding to the plurality of candidate bit rates being greater than the second cache volume threshold, a maximum candidate bit rate in the at least one candidate bit rate corresponding to the at least one second cache volume as the target bit rate. The terminal may also determine, in response to that no second cache volume in the second cache volumes corresponding to the plurality of candidate bit rates being greater than the second cache volume threshold, a candidate bit rate corresponding to a maximum second cache volume in the second cache volumes corresponding to the plurality of candidate bit rates as the target bit rate.

For Case 2 above, the first cache volume is less than the second cache volume threshold, that is, the terminal's current cache volume of the media stream that has been cached but not played cannot ensure smooth playback of the media stream. In this case, the downloading bit rate of the media stream may be reduced. When at least one second cache volume in the second cache volumes corresponding to the plurality of candidate bit rates is greater than the second cache volume threshold, the at least one candidate bit rate corresponding to the at least one second cache volume can ensure normal playback of the media stream. Correspondingly, the terminal can determine a maximum candidate bit rate in the at least one candidate bit rate corresponding to the at least one second cache volume as the target bit rate. When no second cache volume in the second cache volumes corresponding to the plurality of candidate bit rates is greater than the second cache volume threshold, it indicates that among the plurality of candidate bit rates, there is no bit rate that can ensure normal playback of the media stream. Therefore, the terminal may determine a candidate bit rate corresponding to a maximum second cache volume in the second cache volumes corresponding to the plurality of candidate bit rates as the target bit rate.

For example, the current bit rate may be denoted by $r_c$, the target bit rate is denoted by r, the $n^{th}$ candidate bit rate may be denoted by $r_n$, the second cache volume corresponding to the $n^{th}$ candidate bit rate may be denoted by $q_n$, and the second cache volume threshold may be denoted by $q_l$. If for any $rn$, $q_n \geq q_l$ *is invalid, then $r_n$ corresponding to a maximum $q_n$ value is determined as the target bit rate.* If for any $r_n$, $q_n \geq q_l$ can be valid, then a maximum $r_n$ value among all $r_n$ values that satisfy $q_n \geq q_l$ is used as the target bit rate.

The maximum candidate bit rate in the at least one candidate bit rate corresponding to the at least one second cache volume greater than the second cache volume threshold is determined as the target bit rate, or the candidate bit rate corresponding to the maximum second cache volume in the second cache volumes corresponding to the plurality of candidate bit rates is determined as the target bit rate.

It should be noted that, S43 above may be an optional step of the embodiments of the present disclosure. In some embodiments, the target bit rate may alternatively be a preset bit rate, or a bit rate indicated in a bit rate selecting instruction. For example, a user may choose to switch the bit rate and specify the target bit rate. Correspondingly, the terminal may perform S44 below according to the target bit rate. The present disclosure does not limit the manner of acquiring the target bit rate.

In the above description, the playback status information including the first cache volume is used as an example for description. In some other embodiments, the playback status information may include at least one of freeze information or a frame loss rate in a playback process of the media stream. Correspondingly, the playback status information meeting the bit rate switching condition may be either of the freeze information and the frame loss rate meeting the bit rate switching condition.

The freeze information may include at least one of: the number of freezes within a target time period during a playback of the media stream, a last freeze time or last freeze duration. Correspondingly, the bit rate switching condition may include a number of cases. For example, the number of freezes is greater than a freeze count threshold, duration between the last freeze time and a current moment is less than an interval threshold and the last freeze duration is greater than a duration threshold, or the last freeze duration is greater than a duration threshold, and the like. In such cases, the terminal may reduce the bit rate. Definitely, the bit rate switching condition may also include the following cases: the number of freezes is less than a freeze count threshold, the duration between the last freeze time and the current moment is greater than an interval threshold and the last freeze duration is less than a duration threshold, or the last freeze duration is less than a duration threshold. In such cases, the terminal may increase the bit rate.

For the frame loss rate, correspondingly, the bit rate switching condition may be that the frame loss rate is greater than a first frame loss rate threshold, or the bit rate switching condition may be that the frame loss rate is less than a second frame loss rate threshold, wherein the second frame loss rate threshold is less than the first frame loss rate threshold. In some embodiments, the frame loss rate may alternatively be a frame loss rate within a target time period, for example, a frame loss rate within last minute. The transmission condition of the media stream in a period of time is determined based on the frame loss rate within the period of time, thereby determining whether the bit rate needs to be adjusted.

S44, the terminal determines a target position according to a position of the media frame in the media stream in response to that the playback status information meets the bit rate switching condition.

When the playback status information acquired by the terminal meets the bit rate switching condition, the current bit rate is switched to the target bit rate, to optimize the playback effect of the media stream. Since the target bit rate may be different from the current bit rate, according to a reference relationship used by the terminal when decoding media frames, the terminal may start downloading media frames at different positions after bit rate switching, that is, the target position may change in different bit rate switching cases.

In some embodiments, the terminal can discard the playback status information in response to that the target bit rate being equal to the current bit rate, and does not determine the target position. The terminal may also determine a position of the first media frame in the target media frame group as the target position in response to that the target bit rate being not equal to the current bit rate.

If the target bit rate is the same as the current bit rate, the bit rate at which the terminal transmits the media stream does not change. Therefore, the terminal may continue to transmit media frames starting from a position of a media frame next to the media frame in the target media frame group based on the current bit rate. Correspondingly, the terminal may discard the acquired playback status information. If the target bit rate is different from the current bit rate, the bit rate has changed. It is necessary to keep the bit rate of the target media frame group consistent. Therefore, media frames of the target media frame group may be retransmitted based on the target bit rate. The terminal may start transmitting the media frames from the position of the first media frame in the target media frame group.

For example, as shown in FIG. 5, the media stream currently transmitted by the terminal may include two media frame groups. Each media frame group may include a plurality of media frames, and each media frame corresponds to one timestamp. The media frames in the first media frame group may be arranged based on the timestamps as follows: [1000, 2000, 3000, 4000, 5000, 6000], and the media frames in the second media frame group may be arranged based on the timestamps as follows: [7000, 8000, 9000, 10000, 11000, 12000]. For example, the terminal is currently receiving the media frame with the timestamp 8000 in the second media frame group. If the target bit rate determined by the terminal after receiving the media frame with the timestamp 8000 is the same as the current bit rate, the terminal does not need to switch the bit rate or send a frame acquiring request to the server, and may continue to receive media frames starting from the media frame with the timestamp 9000. If the target bit rate determined by the terminal after receiving the media frame with the timestamp 8000 is different from the current bit rate, the terminal may switch the bit rate and send a frame acquiring request to the server. Moreover, to keep the bit rate of the media frame group consistent, the terminal may re-acquire the media frames in the media frame group starting from the media frame with the timestamp 7000. The target position for starting transmission of the media frames is re-determined according to a relationship between values of the target bit rate and the current bit rate.

S45, the terminal sends a frame acquiring request to the server based on the target bit rate and the target position.

After determining the target bit rate and the target position, the terminal may send a frame acquiring request to the server. The frame acquiring request is used for instructing the server to return media frames starting from the target position in the media stream based on the target bit rate. Thus, the terminal can acquire the media frames starting from the target position in the media stream corresponding to the target bit rate, and then transmit the media frames.

It should be noted that, the target bit rate may be the same as or different from the current bit rate. If the target bit rate is the same as the current bit rate, the terminal may continue to receive media frames of the media stream from the server at the current bit rate. In other words, when the target bit rate is the same as the current bit rate, the terminal may not switch the bit rate, and correspondingly, the terminal may not send the frame acquiring request to the server. If the target bit rate is different from the current bit rate, the terminal may switch the current bit rate to be the target bit rate, and acquire media frames from the server based on the target bit rate. In other words, when the target bit rate is different from the current bit rate, the terminal may switch the bit rate, and correspondingly, the terminal may send the frame acquiring request to the server.

In some embodiments, when the target bit rate is equal to the current bit rate, the terminal may discard the playback status information. The terminal does not send the frame acquiring request to the server, but continues to receive media frames in the media stream at the current bit rate, until receiving next playback status information of the media stream.

In some embodiments, if the target bit rate is different from the current bit rate, the terminal may cut off the link with the server, and resend a frame acquiring request to the server, to request the server to transmit media frames starting from the target position at the target bit rate. The terminal may not cut off the link with the server, but resend a frame acquiring request. In this case, the terminal may receive the media stream with a plurality of bit rates, and during playback of the media stream, the terminal preferentially plays the media stream with the highest bit rate. The terminal requests media frames with the switched bit rate without cutting off the link, so as to ensure that media frames before the bit rate switching can be played when a problem occurs during playback of the media frames acquired at the target bit rate.

S46, the server sends media frames starting from the target position in the media stream to the terminal based on the target bit rate and the target position.

After determining the target bit rate and the target position, the terminal may send a frame acquiring request to the server. Correspondingly, the server may receive and parse the frame acquiring request. Further, the server can send, to the terminal, media frames starting from the target position in the media stream corresponding to the target bit rate according to the target bit rate obtained through parsing and the target position, so as to transmit the media stream.

The case where the playback status information meets the bit rate switching condition has been described above. In some embodiments, when the playback status information does not meet the bit rate switching condition, the terminal may continue to transmit a media frame next to the media frame in the media stream based on the current bit rate.

It should be noted that, in the method for switching a bit rate provided in the present disclosure, the media stream is transmitted in a streaming manner, thus achieving frame-level transmission. In the process of transmitting media frames, the bit rate can be adjusted adaptively, and the frame acquiring request sent by the server to the terminal may be a FAS request, to request media frames corresponding to the switched bit rate.

The method embodiment with the terminal as a main execution entity is described above, and the embodiments of the present disclosure are described below by using the server as a main execution entity.

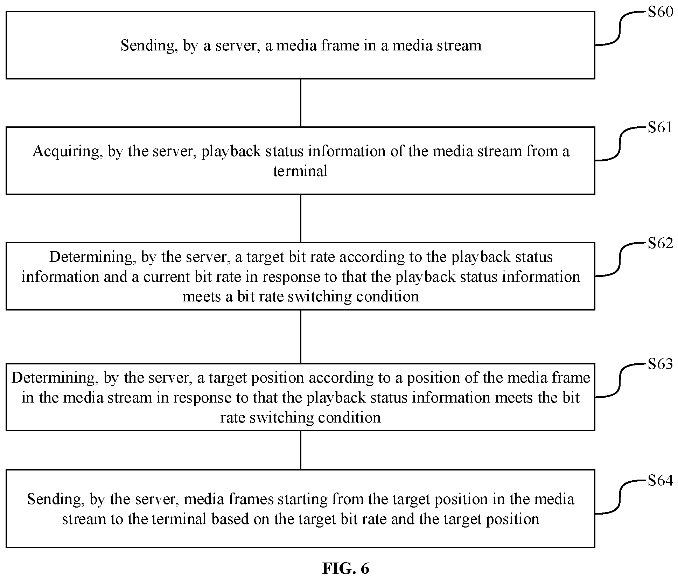

FIG. 6 is a flowchart of a method for switching a bit rate according to an exemplary embodiment. Referring to FIG. 6, the method includes the following steps:

> S60, the server sends a media frame in a media stream.
> S61, the server acquires playback status information of the media stream from a terminal.

The terminal may be a terminal used by a user. The terminal may be connected to the server via a wired network or a wireless network. The server may be configured to provide a media stream of a plurality of bit rates. The media stream may include a plurality of media frames. The media frame may be an audio frame or an image frame. The plurality of media frames may be obtained by sampling an original media resource. When receiving the media stream, the terminal may continuously acquire a plurality of media frames in the media stream and then play the acquired media frames, to implement transmission and playback of the media stream.

The server acquires the playback status information of the media stream from the terminal. The playback status information may be used for determining whether it is necessary to switch a transmission bit rate of the media stream. The media frame sent by the server may be any media frame in the media stream. In other words, the server may start performing the steps of switching a bit rate at any time point during sending of the media stream. any time point may be determined according to service requirements, such that the server automatically starts performing the steps of switching a bit rate at fixed time intervals, or the technician may manually control the server to perform the steps of switching a bit rate, which is not limited in the present disclosure.

In some embodiments, the server may send a playback status information acquiring request to the terminal, such that the terminal sends the playback status information of the terminal to the server. Then, the server can determine, for the terminal, whether the steps of switching a bit rate needs to be performed. The playback status information may be actively sent by the terminal to the server, and the manner of acquiring the playback status information by the server is not limited in the present application.

S62, the server determines a target bit rate according to the playback status information and a current bit rate in response to that the playback status information meets a bit rate switching condition.

S62 is similar to S43 above, except that the execution entity has changed from the terminal to the server, and details are not described herein again.

It should be noted that, S62 above may be an optional step of the embodiments of the present disclosure. In some embodiments, the target bit rate may alternatively be a preset bit rate, or a bit rate indicated in a bit rate selecting instruction. For example, the server may choose to switch the bit rate and specify the target bit rate. Correspondingly, the server may perform S63 below according to the target bit rate. The present disclosure does not limit the manner of acquiring the target bit rate.

S63, the server determines a target position according to a position of the media frame in the media stream in response to that the playback status information meets the bit rate switching condition.

S63 is similar to S44 above, except that the execution entity has changed from the terminal to the server, and details are not described herein again.

S64, the server sends media frames starting from the target position in the media stream to the terminal based on the target bit rate and the target position.

S64 is similar to S45 above, and the execution entity may change from the terminal to the server. Correspondingly, after determining the target bit rate and the target position, the server may directly find media frames starting from the target position in the media stream corresponding to the target bit rate according to the target bit rate and the target position, and transmit the media frames starting from the target position in the media stream to the terminal based on the target bit rate, so as to transmit the media stream. Steps of determining the target bit rate and the target position and sending the media stream to the terminal performed by the server are similar to the embodiment shown in FIG. 4, and details are not described herein again.

The method embodiment provided in the embodiments of the present disclosure is described above, and the virtual apparatus provided in the embodiments of the present disclosure is illustrated below.

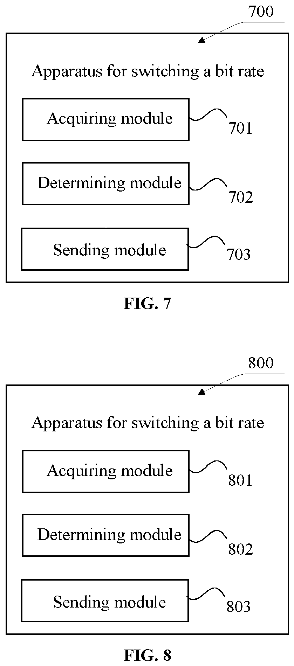

FIG. 7 is a block diagram of an apparatus for switching a bit rate according to an exemplary embodiment. The apparatus includes:

an acquiring module 701, configured to receive a media frame in a media stream; and acquire playback status information of the media stream;
a determining module 702, configured to determine a target position according to a position of the media frame in the media stream in response to that the playback status information meets a bit rate switching condition; and
a sending module 703, configured to send a frame acquiring request to a server based on the target position, wherein the frame acquiring request is used for instructing the server to return media frames starting from the target position in the media stream based on a target bit rate.

In some embodiments, the playback status information includes a first cache volume, the bit rate switching condition includes that the first cache volume is greater than a first cache volume threshold or that the first cache volume is less than a second cache volume threshold, the first cache volume is a current cache volume of the media stream that has been cached but not played, and the second cache volume threshold is less than the first cache volume threshold.

In some embodiments, the playback status information includes at least one of freeze information or a frame loss rate in a playback process of the media stream; the freeze information includes at least one of: the number of freezes within a target time period during a playback of the media stream, a last freeze time or last freeze duration; the bit rate switching condition includes any one of: the number of freezes is greater than a freeze count threshold or the number of freezes is less than a freeze count threshold; duration between the last freeze time and a current moment is less than an interval threshold and the last freeze duration is greater than a duration threshold, or the duration between the last freeze time and the current moment is greater than an interval threshold and the last freeze duration is less than a duration threshold; the last freeze duration is greater than a duration threshold, or the last freeze duration is less than a duration threshold; the frame loss rate is greater than a first frame loss rate threshold; the frame loss rate is less than a second frame loss rate threshold, wherein the second frame loss rate threshold is less than the first frame loss rate threshold; the frame loss rate within the target time period is greater than the first frame loss rate threshold; and the frame loss rate within the target time period is less than the second frame loss rate threshold.

In some embodiments, the sending module 703 is configured to send the frame acquiring request to the server based on the target position in response to that the target bit rate being not equal to a current bit rate.

In some embodiments, the determining module 702 is configured to: determine the target bit rate according to the playback status information and a current bit rate in response to that the playback status information meets the bit rate switching condition; and determine the target position according to the position of the media frame in the media stream in response to that the target bit rate being not equal to the current bit rate.

In some embodiments, the determining module 702 is further configured to discard the playback status information in response to that the target bit rate being equal to the current bit rate.

In some embodiments, the determining module 702 is further configured to determine a position of a first media frame in a target media frame group as the target position in response to that the target bit rate being not equal to the current bit rate, wherein the target media frame group is a media frame group in which the media frame is located.

In some embodiments, the determining module 702 is configured to: acquire a plurality of candidate bit rates; acquire a second cache volume corresponding to each candidate bit rate according to a relationship between the plurality of candidate bit rates and the current bit rate, the playback status information, and a position of the media frame of the media stream in a target media frame group, wherein the target media frame group is a media frame group in which the media frame is located; and determine the target bit rate from the plurality of candidate bit rates according to a relationship between the second cache volume corresponding to each candidate bit rate and the first cache volume threshold or the second cache volume threshold, wherein the second cache volume corresponding to each candidate bit rate is a cache volume of the media stream that has been cached but not played at the end of transmission of the target media frame group, after a bit rate is switched to the candidate bit rate.

In some embodiments, the determining module 702 is configured to: acquire a cache increment for the media stream at the end of transmission of the target media frame group according to the position of the media frame of the media stream in the target media frame group; determine a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates; and acquire the second cache volume corresponding to each candidate bit rate according to the first cache volume in the playback status information, the cache increment, and the playback volume, wherein the first cache volume is a current cache volume of the media stream that has been cached but not played.

In some embodiments, the determining module 702 is configured to: determine a cache position for continuing to cache the target media frame group according to the relationship between the plurality of candidate bit rates and the current bit rate; acquire current network status information; and determining the playback volume of the media stream in the target cache process according to the current network status information, the cache position, a length of the target media frame group and the plurality of candidate bit rates.

In some embodiments, the cache position is a position of a media frame next to the media frame in response to that any candidate bit rate being equal to the current bit rate; or the cache position is a position of a first media frame of the target media frame group in response to that any candidate bit rate being not equal to the current bit rate.

In some embodiments, the current first cache volume of the media stream that has been cached but not played is greater than the first cache volume threshold. The determining module 702 is configured to: determine, in response to that at least one second cache volume in the second cache volumes corresponding to the plurality of candidate bit rates being greater than the first cache volume threshold, a candidate bit rate corresponding to a maximum of the at least one second cache volume as the target bit rate, wherein the target bit rate is greater than or equal to the current bit rate; or determine the current bit rate as the target bit rate in response to that no second cache volume in the second cache volumes corresponding to the plurality of candidate bit rates being greater than the first cache volume threshold, wherein the target bit rate is greater than or equal to the current bit rate.

In some embodiments, the current first cache volume of the media stream that has been cached but not played is less than the second cache volume threshold. The determining module 702 is configured to: determine, in response to that at least one second cache volume in the second cache volumes corresponding to the plurality of candidate bit rates being greater than the second cache volume threshold, a candidate bit rate corresponding to a maximum of the at least one second cache volume as the target bit rate, wherein the target bit rate is less than or equal to the current bit rate; or determine a candidate bit rate corresponding to a maximum second cache volume in the second cache volumes corresponding to the plurality of candidate bit rates as the target bit rate in response to that no second cache volume in the second cache volumes corresponding to the plurality of candidate bit rates being greater than the second cache volume threshold, wherein the target bit rate is less than or equal to the current bit rate.

It should be noted that, when the apparatus for switching a bit rate provided in the foregoing embodiment switches a bit rate, the division of the foregoing function modules is merely used as an example. In practical applications, the foregoing functions may be allocated to and completed by different function modules as required, that is, an internal structure of the apparatus is divided into different function modules to complete all or some of the functions described above. In addition, the apparatus for switching a bit rate provided in the foregoing embodiment belongs to the same conception as the embodiment of the method for switching a bit rate. For a specific implementation process, refer to the method embodiment, and details are not described herein again.

FIG. 8 is a block diagram of an apparatus for switching a bit rate according to an exemplary embodiment. The apparatus includes:

an acquiring module 801, configured to send a media frame in a media stream; and acquire playback status information of the media stream from a terminal; a determining module 802, configured to determine a target position according to a position of the media frame in the media stream in response to that the playback status information meets a bit rate switching condition; and a sending module 803, configured to send media frames starting from the target position in the media stream to the terminal based on the target position and a target bit rate.

In some embodiments, the playback status information includes a first cache volume, the bit rate switching condition includes that the first cache volume is greater than a first cache volume threshold or that the first cache volume is less than a second cache volume threshold, the first cache volume is a current cache volume of the media stream that has been cached but not played, and the second cache volume threshold is less than the first cache volume threshold.

In some embodiments, the playback status information includes at least one of freeze information or a frame loss rate in a playback process of the media stream; the freeze information includes at least one of: the number of freezes within a target time period during a playback of the media stream, a last freeze time or last freeze duration; the bit rate switching condition includes any one of: the number of freezes is greater than a freeze count threshold or the number of freezes is less than a freeze count threshold; duration between the last freeze time and a current moment is less than an interval threshold and the last freeze duration is greater than a duration threshold, or the duration between the last freeze time and the current moment is greater than an interval threshold and the last freeze duration is less than a duration threshold; the last freeze duration is greater than a duration threshold, or the last freeze duration is less than a duration threshold; the frame loss rate is greater than a first frame loss rate threshold; the frame loss rate is less than a second frame loss rate threshold, wherein the second frame loss rate threshold is less than the first frame loss rate threshold; the frame loss rate within the target time period is greater than the first frame loss rate threshold; and the frame loss rate within the target time period is less than the second frame loss rate threshold.

In some embodiments, the determining module 802 is configured to: determine the target bit rate according to the playback status information and a current bit rate in response to that the playback status information meets the bit rate switching condition; and determine the target position according to the position of the media frame in the media stream in response to that the target bit rate being not equal to the current bit rate.

In some embodiments, the determining module 802 is further configured to continue to transmit a media frame next to the media frame to the terminal based on the current bit rate in response to that the target bit rate being equal to the current bit rate.

In some embodiments, the determining module 802 is further configured to determine a position of a first media frame in a target media frame group as the target position in response to that the target bit rate being not equal to the current bit rate, wherein the target media frame group is a media frame group in which the media frame is located.

In some embodiments, the determining module 802 is configured to: acquire a plurality of candidate bit rates; acquire a second cache volume corresponding to each candidate bit rate according to a relationship between the plurality of candidate bit rates and the current bit rate, the playback status information, and a position of the media frame of the media stream in a target media frame group, wherein the target media frame group is a media frame group in which the media frame is located; and determine the target bit rate from the plurality of candidate bit rates according to a relationship between the second cache volume corresponding to each candidate bit rate and the first cache volume threshold or the second cache volume threshold, wherein the second cache volume corresponding to each candidate bit rate is a cache volume of the media stream that has been cached but not played at the end of transmission of the target media frame group, after a bit rate is switched to the candidate bit rate.

In some embodiments, the determining module 802 is configured to: acquire a cache increment for the media stream at the end of transmission of the target media frame group according to the position of the media frame of the media stream in the target media frame group; determine a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates; and acquire the second cache volume corresponding to each candidate bit rate according to the first cache volume in the playback status information, the cache increment, and the playback volume, wherein the first cache volume is a current cache volume of the media stream that has been cached but not played.

In some embodiments, the determining module 802 is configured to: determine a cache position for continuing to cache the target media frame group according to the relationship between the plurality of candidate bit rates and the current bit rate; acquire current network status information; and determine the playback volume of the media stream in the target cache process according to the current network status information, the cache position, a length of the target media frame group and the plurality of candidate bit rates.

In some embodiments, the cache position is a position of a media frame next to the media frame in response to that any candidate bit rate being equal to the current bit rate; or the cache position is a position of a first media frame of the target media frame group in response to that any candidate bit rate being not equal to the current bit rate.

In some embodiments, the current first cache volume of the media stream that has been cached but not played is greater than the first cache volume threshold; and the determining module 802 is configured to: determine, in response to that at least one second cache volume in the second cache volumes corresponding to the plurality of candidate bit rates being greater than the first cache volume threshold, a candidate bit rate corresponding to a maximum of the at least one second cache volume as the target bit rate, wherein the target bit rate is greater than or equal to the current bit rate; or determine the current bit rate as the target bit rate in response to that no second cache volume in the second cache volumes corresponding to the plurality of candidate bit rates being greater than the first cache volume threshold, wherein the target bit rate is greater than or equal to the current bit rate.

In some embodiments, the current first cache volume of the media stream that has been cached but not played is less than the second cache volume threshold. The determining module 802 is configured to: determine, in response to that at least one second cache volume in the second cache volumes corresponding to the plurality of candidate bit rates being greater than the second cache volume threshold, a maximum candidate bit rate in the at least one candidate bit rate corresponding to the at least one second cache volume as the target bit rate, wherein the target bit rate is less than or equal to the current bit rate; or determine a candidate bit rate corresponding to a maximum second cache volume in the second cache volumes corresponding to the plurality of candidate bit rates as the target bit rate in response to that no second cache volume in the second cache volumes corresponding to the plurality of candidate bit rates being greater than the second cache volume threshold, wherein the target bit rate is less than or equal to the current bit rate.

It should be noted that, when the apparatus for switching a bit rate provided in the foregoing embodiment switches a bit rate, the division of the foregoing function modules is merely used as an example. In practical applications, the foregoing functions may be allocated to and completed by different function modules as required, that is, an internal structure of the apparatus is divided into different function modules to complete all or some of the functions described above. In addition, the apparatus for switching a bit rate provided in the foregoing embodiment belongs to the same conception as the embodiment of the method for switching a bit rate. For a specific implementation process, refer to the method embodiment, and details are not described herein again.

The virtual apparatus provided in the embodiment of the present disclosure is described above, and the hardware apparatus provided in the embodiment of the present disclosure is illustrated below.

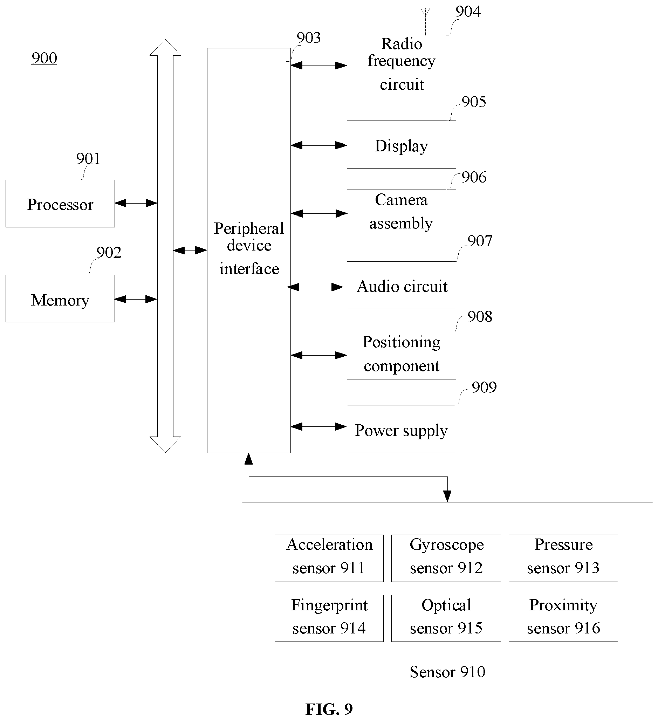

The terminal in the foregoing method embodiment is implemented as the terminal below. For example, FIG. 9 is a structural block diagram of a terminal 900 according to an exemplary embodiment of the present disclosure. The terminal 900 may be a smartphone, a tablet computer, a Moving Picture Experts Group Audio Layer III (MP3) player, a Moving Picture Experts Group Audio Layer IV (MP4) player, a laptop computer, or a desktop computer. The terminal 900 may also be referred to as user equipment, a portable terminal, a laptop terminal, a desktop terminal, or the like.

Generally, the terminal 900 includes at least one processor 901 and at least one memory 902.

The processor 901 may include one or more processing cores, for example, a 4-core processor or a 9-core processor. The processor 901 may be implemented by using at least one hardware form of digital signal processing (DSP), a field-programmable gate array (FPGA), and a programmable logic array (PLA). The processor 901 may alternatively include a main processor and a coprocessor. The main processor is configured to process data in an awake state, also referred to as a central processing unit (CPU), and the coprocessor is a low-power processor configured to process data in a standby state. In some embodiments, the processor 901 may be integrated with a graphics processing unit (GPU). The GPU is configured to be responsible for rendering and drawing content that a display needs to display. In some embodiments, the processor 901 may further include an artificial intelligence (AI) processor. The AI processor is configured to process computing operations related to machine learning.

The memory 902 may include one or more computer readable storage media, which may be non-transient. The memory 902 may further include a high-speed random access memory and a non-volatile memory such as one or more magnetic disk storage devices and a flash storage device. In some embodiments, the non-transitory computer readable storage medium in the memory 902 is configured to store at least one instruction. The at least one instruction is executed by the processor 901 to implement the method for switching a bit rate provided in the method embodiment of the present disclosure.

In some embodiments, the terminal 900 may further optionally include a peripheral device interface 903 and at least one peripheral device. The processor 901, the memory 902, and the peripheral device interface 903 may be connected through a bus or a signal cable. Each peripheral device may be connected to the peripheral device interface 903 through a bus, a signal cable, or a circuit board. Specifically, the peripheral device includes: at least one of a radio frequency circuit 904, a touch display 905, a camera assembly 906, an audio circuit 907, a positioning component 908, and a power supply 909.

The peripheral device interface 903 may be configured to connect at least one peripheral device related to input/output (I/O) to the processor 901 and the memory 902. In some embodiments, the processor 901, the memory 902, and the peripheral device interface 903 are integrated into the same chip or circuit board; in some other embodiments, any one or two of the processor 901, the memory 902, and the peripheral device interface 903 may be implemented on an independent chip or circuit board. This is not limited in this embodiment.

The radio frequency circuit 904 is configured to receive and transmit a radio frequency (RF) signal, also referred to as an electromagnetic signal. The radio frequency circuit 904 communicates with a communications network and another communications device by using the electromagnetic signal. The radio frequency circuit 904 may convert an electric signal into an electromagnetic signal for transmission, or convert a received electromagnetic signal into an electric signal. Optionally, the radio frequency circuit 904 includes: an antenna system, an RF transceiver, one or more amplifiers, a tuner, an oscillator, a digital signal processor, a codec chip set, a subscriber identity module card, and the like. The radio frequency circuit 904 may communicate with another terminal through at least one wireless communication protocol. The wireless communication protocol includes, but is not limited to: a metropolitan area network, generations of mobile communication networks (2G, 3G, 4G, and 5G), a wireless local area network and/or a wireless fidelity (Wi-Fi) network. In some embodiments, the radio frequency circuit 904 may further include a near field communication (NFC) related circuit, and is not limited in the present disclosure.

The display 905 is configured to display a user interface (UI). The UI may include a graph, a text, an icon, a video, and any combination thereof. When the display 905 is a touch display, the display 905 is further capable of acquiring a touch signal on or above a surface of the display 905. The touch signal may be inputted to the processor 901 for processing as a control signal. In this case, the display 905 may be further configured to provide a virtual button and/or a virtual keyboard, which is also referred to as a soft button and/or a soft keyboard. In some embodiments, there may be one display 905, disposed on a front panel of the terminal 900. In some other embodiments, there may be at least two displays 905, disposed on different surfaces of the terminal 900 respectively or in a folded design. In still other embodiments, the touch display 905 may be a flexible display, disposed on a curved surface or a folded surface of the terminal 900. Even, the display 905 may be further set in a non-rectangular irregular pattern, namely, a special-shaped screen. The display 905 may be prepared by using materials such as a liquid crystal display (LCD), an organic light-emitting diode (OLED), or the like.

The camera assembly 906 is configured to acquire an image or a video. In some embodiments, the camera assembly 906 includes a front-facing camera and a rear-facing camera. Generally, the front-facing camera is disposed on a front panel of the terminal 900, and the rear-facing camera is disposed on a back surface of the terminal 900. In some embodiments, there are at least two rear-facing cameras, which are respectively any one of a main camera, a depth-of-field camera, a wide-angle camera, and a telephoto camera, to implement a background blurring function by fusing the main camera and the depth-of-field camera, and panoramic shooting and virtual reality (VR) shooting functions or other fusing shooting functions by fusing the main camera and the wide-angle camera. In some embodiments, the camera assembly 906 may further include a flash. The flash may be a single color temperature flash, or may be a double color temperature flash. The double color temperature flash is a combination of a warm light flash and a cold light flash, and may be used for light compensation under different color temperatures.

The audio circuit 907 may include a microphone and a speaker. The microphone is configured to collect sound waves of a user and an environment, and convert the sound waves into electric signals and input the electrical signals into the processor 901 for processing, or input the electrical signals into the radio frequency circuit 904 to implement voice communication. For the purpose of stereo sound collection or noise reduction, there may be a plurality of microphones, respectively disposed at different parts of the terminal 900. The microphone may be further an array microphone or an omnidirectional collection microphone. The speaker is configured to convert electric signals from the processor 901 or the radio frequency circuit 904 into sound waves. The speaker may be a conventional thin-film speaker or a piezoelectric ceramic speaker. In a case that the speaker is the piezoelectric ceramic speaker, electric signals not only can be converted into sound waves audible to human, but also can be converted into sound waves inaudible to human for ranging and other purposes. In some embodiments, the audio circuit 907 may further include an earphone jack.

The positioning component 908 is configured to position a current geographic location of the terminal 900, to implement a navigation or a location based service (LBS). The positioning component 908 may be a positioning component based on the Global Positioning System (GPS) of the United States, the BeiDou system of China, or the GALILEO System of Russia.

The power supply 909 is configured to supply power for various components in the terminal 900. The power supply 909 may be an alternating current, a direct current, a disposable battery, or a rechargeable battery. When the power supply 909 includes the rechargeable battery, the rechargeable battery may be a wired rechargeable battery or a wireless rechargeable battery.

The wired rechargeable battery is a battery charged through a wired circuit, and the wireless rechargeable battery is a battery charged through a wireless coil. The rechargeable battery may be further configured to support a fast charge technology.

In some embodiments, the terminal 900 further includes one or more sensors 910. The one or more sensors 910 include, but are not limited to: an acceleration sensor 911, a gyroscope sensor 912, a pressure sensor 913, a fingerprint sensor 914, an optical sensor 915, and a proximity sensor 916.

The acceleration sensor 911 may detect acceleration on three coordinate axes of a coordinate system established by the terminal 900. For example, the acceleration sensor 911 may be configured to detect components of gravity acceleration on the three coordinate axes. The processor 901 may control, according to a gravity acceleration signal collected by the acceleration sensor 911, the touch display 905 to display the user interface in a landscape view or a portrait view. The acceleration sensor 911 may be further configured to collect game or user motion data.

The gyroscope sensor 912 may detect a body direction and a rotation angle of the terminal 900. The gyroscope sensor 912 may cooperate with the acceleration sensor 911 to collect a 3D action performed by the user on the terminal 900. The processor 901 may implement the following functions according to the data collected by the gyroscope sensor 912: motion sensing (such as changing the UI according to a tilt operation of the user), image stabilization at shooting, game control, and inertial navigation.

The pressure sensor 913 may be disposed on a side frame of the terminal 900 and/or a lower layer of the display 905. When the pressure sensor 913 is disposed on the side frame of the terminal 900, a holding signal of the user on the terminal 900 may be detected. The processor 901 performs left and right hand recognition or a quick operation according to the holding signal collected by the pressure sensor 913. When the pressure sensor 913 is disposed on the lower layer of the touch display 905, the processor 901 controls an operable control on the UI according to a pressure operation of the user on the touch display 905. The operable control includes at least one of a button control, a scroll bar control, an icon control and a menu control.

The fingerprint sensor 914 is configured to collect a fingerprint of a user, and the processor 901 identifies an identity of the user according to the fingerprint collected by the fingerprint sensor 914, or the fingerprint sensor 914 identifies an identity of the user according to the collected fingerprint. When the identity of the user is identified as a trusted identity, the processor 901 authorizes the user to perform a related sensitive operation. The sensitive operation includes unlocking a screen, viewing encrypted information, downloading software, payment, changing settings, and the like. The fingerprint sensor 914 may be disposed on a front surface, a back surface, or a side surface of the terminal 900. When the terminal 900 is provided with a physical button or a vendor logo, the fingerprint sensor 914 may be integrated with the physical button or the vendor logo.

The optical sensor 915 is configured to collect ambient light intensity. In an embodiment, the processor 901 may control display brightness of the touch display 905 according to the ambient light intensity collected by the optical sensor 915. Specifically, when the ambient light intensity is relatively high, the display brightness of the touch display 905 is turned up. When the ambient light intensity is relatively low, the display brightness of the touch display 905 is turned down. In another embodiment, the processor 901 may further dynamically adjust a camera parameter of the camera assembly 906 according to the ambient light intensity collected by the optical sensor 915.

The proximity sensor 916, also referred to as a distance sensor, is usually disposed on the front panel of the terminal 900. The proximity sensor 916 is configured to collect a distance between a user and the front surface of the terminal 900. In an embodiment, when the proximity sensor 916 detects that the distance between the user and the front surface of the terminal 900 gradually becomes smaller, the touch display 905 is controlled by the processor 901 to switch from a screen-on state to a screen-off state. In a case that the proximity sensor 916 detects that the distance between the user and the front surface of the terminal 900 gradually becomes larger, the touch display 905 is controlled by the processor 901 to switch from the screen-off state to the screen-on state.

A person skilled in the art may understand that the structure shown in FIG. 9 does not constitute a limitation to the terminal 900, and the terminal may include more or fewer components than those shown in the figure, or some components may be combined, or a different component deployment may be used.

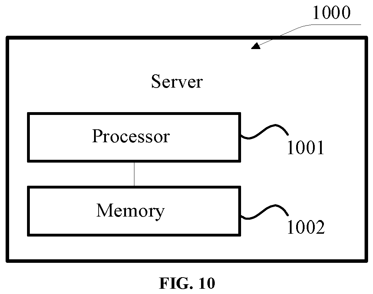

The server in the foregoing method embodiment may be implemented as the server below. For example, FIG. 10 is a block diagram of a server according to an exemplary embodiment. The server 1000 may vary greatly due to different configurations or performance and may include at least one central processing unit (CPU) 1001 and at least one memory 1002, wherein the at least one memory 1002 has at least one instruction stored therein, the at least one instruction being loaded and executed by the at least one CPU 1001 to implement the method for switching a bit rate provided in the method embodiments described above. Certainly, the server may also have components such as a wired or wireless network interface, and an input/output interface, for input and output. The server may further include other components for implementing the functions of the device, which will not be described herein.

The foregoing terminal and server are electronic devices. The electronic device includes at least one processor, and at least one memory configured to store instructions executable by the at least one processor. The at least one processor is configured to execute the instructions to implement the method steps of the method for switching a bit rate in the foregoing embodiments. In some embodiments, all the features and applications described in the foregoing embodiments may be executed by instructions recorded in a storage medium of the memory. When the instructions are executed by the at least one processor, the at least one processor may be caused to perform actions indicated by the instructions.

In an exemplary embodiment, a storage medium including instructions is further provided, e.g., a memory including instructions. The instructions may be executed by a processor of an electronic device to implement method operations of the method for switching a bit rate shown in the foregoing embodiments. In some embodiments, all the features and applications described in the foregoing embodiments may be executed by instructions recorded in a storage medium. When the instructions are executed by at least one computing or processing unit (for example, at least one processor, processor core, or other processing unit), the at least one processing unit may be caused to perform actions indicated by the instructions. In some embodiments, the storage medium may be a non-transitory computer-readable storage medium. For example, the non-transitory computer-readable storage medium may include a read-only memory (ROM), a random access memory (RAM), a compact disc read-only memory (CD-ROM), a magnetic tape, a floppy disk, an optical data storage device, or the like.

An embodiment of the present disclosure further provides a computer program product, including at least one instruction. When the at least one instruction is executable by a processor of an electronic device, the electronic device may be caused to perform the method for switching a bit rate provided in any of the foregoing embodiments.

A person skilled in the art can easily think of other implementation solutions of the present disclosure after considering the specification and practicing the disclosure herein. The present disclosure is intended to cover any variations, purposes or applicable changes of the present disclosure. Such variations, purposes or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the appended claims.

It should be noted that, the present disclosure is not limited to the precise structures that have been described above and shown in the accompanying drawings, and can be modified and changed in many ways without departing from the scope of the present disclosure. The scope of the present disclosure is defined by the appended claims.

**Claims**

1. A method for switching a bit rate, applied to an electronic device, comprising:

   receiving a media frame in a media stream;
   acquiring playback status information of the media stream;
   determining a target position according to a position of the media frame in the media stream in response to that the playback status information meets a bit rate switching condition; and
   sending a frame acquiring request to a server based on the target position, wherein the frame acquiring request is used for instructing the server to return media frames starting from the target position in the media stream based on a target bit rate.

2. The method according to claim 1, wherein the playback status information comprises a first cache volume, the bit rate switching condition comprises that the first cache volume is greater than a first cache volume threshold or that the first cache volume is less than a second cache volume threshold, the first cache volume is a current cache volume of the media stream that has been cached but not played, and the second cache volume threshold is less than the first cache volume threshold.

3. The method according to claim 1, wherein the playback status information comprises at least one of freeze information or a frame loss rate in a playback process of the media stream; the freeze information comprises at least one of: the number of freezes within a target time period during a playback of the media stream, a last freeze time or last freeze duration; the bit rate switching condition comprises any one of:

   the number of freezes is greater than a freeze count threshold or the number of freezes is less than a freeze count threshold;
   duration between the last freeze time and a current moment is less than an interval threshold and the last freeze duration is greater than a duration threshold, or the duration between the last freeze time and the current moment is greater than an interval threshold and the last freeze duration is less than a duration threshold;
   the last freeze duration is greater than a duration threshold, or the last freeze duration is less than a duration threshold;
   the frame loss rate is greater than a first frame loss rate threshold;
   the frame loss rate is less than a second frame loss rate threshold, wherein the second frame loss rate threshold is less than the first frame loss rate threshold;

the frame loss rate within the target time period is greater than the first frame loss rate threshold; and

the frame loss rate within the target time period is less than the second frame loss rate threshold.

4. The method according to claim 1, wherein sending a frame acquiring request to a server based on the target position comprises:
sending the frame acquiring request to the server based on the target position in response to that the target bit rate being not equal to a current bit rate.

5. The method according to claim 1, wherein determining a target position according to a position of the media frame in the media stream in response to that the playback status information meets a bit rate switching condition comprises:

determining the target bit rate according to the playback status information and a current bit rate in response to that the playback status information meets the bit rate switching condition; and determining the target position according to the position of the media frame in the media stream in response to that the target bit rate being not equal to the current bit rate.

6. The method according to claim 5, further comprising:
discarding the playback status information in response to that the target bit rate being equal to the current bit rate.

7. The method according to claim 5, wherein determining the target position according to the position of the media frame in the media stream in response to that the target bit rate being not equal to the current bit rate comprises:
determining a position of a first media frame in a target media frame group as the target position in response to that the target bit rate being not equal to the current bit rate, wherein the target media frame group is a media frame group in which the media frame is located.

8. The method according to claim 5, wherein determining the target bit rate according to the playback status information and a current bit rate comprises:

acquiring a plurality of candidate bit rates; acquiring a second cache volume corresponding to each candidate bit rate according to a relationship between the plurality of candidate bit rates and the current bit rate, the playback status information, and a position of the media frame of the media stream in a target media frame group, wherein the target media frame group is a media frame group in which the media frame is located; and
determining the target bit rate from the plurality of candidate bit rates according to a relationship between the second cache volume corresponding to each candidate bit rate and one of a first cache volume threshold and a second cache volume threshold;
wherein the second cache volume corresponding to each candidate bit rate is a cache volume of the media stream that has been cached but not played at an end of transmission of the target media frame group, after a bit rate is switched to the candidate bit rate.

9. The method according to claim 8, wherein acquiring a second cache volume corresponding to each candidate bit rate according to a relationship between the plurality of candidate bit rates and the current bit rate, the playback status information, and a position of the media frame of the media stream in a target media frame group comprises:

acquiring a cache increment for the media stream at the end of transmission of the target media frame group according to the position of the media frame of the media stream in the target media frame group;
determining a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates; and
acquiring the second cache volume corresponding to each candidate bit rate according to a first cache volume in the playback status information, the cache increment, and the playback volume, wherein the first cache volume is a current cache volume of the media stream that has been cached but not played.

10. The method according to claim 9, wherein determining a playback volume of the media stream in a target cache process according to a cache position corresponding to the relationship between the plurality of candidate bit rates and the current bit rate comprises:

determining a cache position for continuing to cache the target media frame group according to the relationship between the plurality of candidate bit rates and the current bit rate;
acquiring current network status information; and

determining the playback volume of the media stream in the target cache process according to the current network status information, the cache position, a length of the target media frame group and the plurality of candidate bit rates.

11. The method according to claim 10, wherein the cache position is a position of a media frame next to the media frame in response to that any candidate bit rate being equal to the current bit rate; or the cache position is a position of a first media frame of the target media frame group in response to that any candidate bit rate being not equal to the current bit rate.

12. The method according to claim 8, wherein the current first cache volume of the media stream that has been cached but not played is greater than the first cache volume threshold; and determining the target bit rate from the plurality of candidate bit rates according to a relationship between the second cache volume corresponding to each candidate bit rate and the first cache volume threshold or the second cache volume threshold comprises:

determining, in response to that at least one second cache volume in the second cache volumes corresponding to the plurality of candidate bit rates being greater than the first cache volume threshold, a candidate bit rate corresponding to a maximum of the at least one second cache volume as the target bit rate, wherein the target bit rate is greater than or equal to the current bit rate; or determining the current bit rate as the target bit rate in response to that no second cache volume in the second cache volumes corresponding to the plurality of candidate bit rates being greater than the first cache volume threshold, wherein the target bit rate is greater than or equal to the current bit rate.

13. The method according to claim 8, wherein the current first cache volume of the media stream that has been cached but not played is less than the second cache volume threshold; and determining the target bit rate from the plurality of candidate bit rates according to a relationship between the second cache volume corresponding to each candidate bit rate and the first cache volume threshold or the second cache volume threshold comprises:

determining, in response to that at least one second cache volume in the second cache volumes corresponding to the plurality of candidate bit rates being greater than the second cache volume threshold, a candidate bit rate corresponding to a maximum of the at least one second cache volume as the target bit rate, wherein the target bit rate is less than or equal to the current bit rate; or determining a candidate bit rate corresponding to a maximum second cache volume in the second cache volumes corresponding to the plurality of candidate bit rates as the target bit rate in response to that no second cache volume in the second cache volumes corresponding to the plurality of candidate bit rates being greater than the second cache volume threshold, wherein the target bit rate is less than or equal to the current bit rate.

14. A method for switching a bit rate, applied to an electronic device, comprising:

sending a media frame in a media stream; acquiring playback status information of the media stream from a terminal; determining a target position according to a position of the media frame in the media stream in response to that the playback status information meets a bit rate switching condition; and sending media frames starting from the target position in the media stream to the terminal based on the target position and a target bit rate.

15. The method according to claim 14, wherein the playback status information comprises a first cache volume, and the first cache volume is a current cache volume of the media stream that has been cached but not played; the bit rate switching condition comprises that the first cache volume is greater than a first cache volume threshold or that the first cache volume is less than a second cache volume threshold, wherein the second cache volume threshold is less than the first cache volume threshold.

16. The method according to claim 14, wherein the playback status information comprises at least one of freeze information or a frame loss rate in a playback process of the media stream; the freeze information comprises at least one of: the number of freezes within a target time period during a playback of the media stream, a last freeze time or last freeze duration; the bit rate switching condition comprises any one of:

the number of freezes is greater than a freeze count threshold or the number of freezes is less than a freeze count threshold; duration between the last freeze time and a current moment is less than an interval threshold and the last freeze duration is greater than a duration threshold, or the duration between the last freeze time and the current moment is greater than an interval threshold and the last freeze duration is less than a duration threshold;

the last freeze duration is greater than a duration threshold, or the last freeze duration is less than a duration threshold;

the frame loss rate is greater than a first frame loss rate threshold;

the frame loss rate is less than a second frame loss rate threshold, wherein the second frame loss rate threshold is less than the first frame loss rate threshold;

the frame loss rate within the target time period is greater than the first frame loss rate threshold; and

the frame loss rate within the target time period is less than the second frame loss rate threshold.

17. The method according to claim 14, wherein determining a target position according to a position of the media frame in the media stream in response to that the playback status information meets a bit rate switching condition comprises:

   determining the target bit rate according to the playback status information and a current bit rate in response to that the playback status information meets the bit rate switching condition; and determining the target position according to the position of the media frame in the media stream in response to that the target bit rate being not equal to the current bit rate.

18. The method according to claim 17, further comprising:
   continuing to transmit a media frame next to the media frame to the terminal based on the current bit rate in response to that the target bit rate being equal to the current bit rate.

19. The method according to claim 17, wherein determining the target position according to the position of the media frame in the media stream in response to that the target bit rate being not equal to the current bit rate comprises:
   determining a position of a first media frame in a target media frame group as the target position in response to that the target bit rate being not equal to the current bit rate, wherein the target media frame group is a media frame group in which the media frame is located.

20. The method according to claim 17, wherein determining the target bit rate according to the playback status information and a current bit rate comprises:

   acquiring a plurality of candidate bit rates;
   acquiring a second cache volume corresponding to each candidate bit rate according to a relationship between the plurality of candidate bit rates and the current bit rate, the playback status information, and a position of the media frame of the media stream in a target media frame group, wherein the target media frame group is a media frame group in which the media frame is located; and
determining the target bit rate from the plurality of candidate bit rates according to a relationship between the second cache volume corresponding to each candidate bit rate and a first cache volume threshold or a second cache volume threshold;
wherein the second cache volume corresponding to each candidate bit rate is a cache volume of the media stream that has been cached but not played at the end of transmission of the target media frame group, after a bit rate is switched to the candidate bit rate.

21. The method according to claim 20, wherein acquiring a second cache volume corresponding to each candidate bit rate according to a relationship between the plurality of candidate bit rates and the current bit rate, the playback status information, and a position of the media frame of the media stream in a target media frame group comprises:

   acquiring a cache increment for the media stream at the end of transmission of the target media frame group according to the position of the media frame of the media stream in the target media frame group;
   determining a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates; and
   acquiring the second cache volume corresponding to each candidate bit rate according to a first cache volume in the playback status information, the cache increment, and the playback volume, wherein the first cache volume is a current cache volume of the media stream that has been cached but not played.

22. The method according to claim 21, wherein determining a playback volume of the media stream in a target cache process according to a cache position corresponding to the relationship between the plurality of candidate bit rates and the current bit rate comprises:

determining a cache position for continuing to cache the target media frame group according to the relationship between the plurality of candidate bit rates and the current bit rate;

acquiring current network status information; and

determining the playback volume of the media stream in the target cache process according to the current network status information, the cache position, a length of the target media frame group and the plurality of candidate bit rates.

23. The method according to claim 22, wherein the cache position is a position of a media frame next to the media frame in response to that any candidate bit rate being equal to the current bit rate; or

the cache position is a position of a first media frame of the target media frame group in response to that any candidate bit rate being not equal to the current bit rate.

24. The method according to claim 20, wherein the current first cache volume of the media stream that has been cached but not played is greater than the first cache volume threshold; and determining the target bit rate from the plurality of candidate bit rates according to a relationship between the second cache volume corresponding to each candidate bit rate and the first cache volume threshold or the second cache volume threshold comprises:

determining, in response to that at least one second cache volume in the second cache volumes corresponding to the plurality of candidate bit rates being greater than the first cache volume threshold, a candidate bit rate corresponding to a maximum of the at least one second cache volume as the target bit rate, wherein the target bit rate is greater than or equal to the current bit rate; or

determining the current bit rate as the target bit rate in response to that no second cache volume in the second cache volumes corresponding to the plurality of candidate bit rates being greater than the first cache volume threshold, wherein the target bit rate is greater than or equal to the current bit rate.

25. The method according to claim 20, wherein the current first cache volume of the media stream that has been cached but not played is less than the second cache volume threshold; and determining the target bit rate from the plurality of candidate bit rates according to a relationship between the second cache volume corresponding to each candidate bit rate and the first cache volume threshold or the second cache volume threshold comprises:

determining, in response to that at least one second cache volume in the second cache volumes corresponding to the plurality of candidate bit rates being greater than the second cache volume threshold, a candidate bit rate corresponding to a maximum of the at least one second cache volume as the target bit rate, wherein the target bit rate is less than or equal to the current bit rate; or

determining a candidate bit rate corresponding to a maximum second cache volume in the second cache volumes corresponding to the plurality of candidate bit rates as the target bit rate in response to that no second cache volume in the second cache volumes corresponding to the plurality of candidate bit rates being greater than the second cache volume threshold, wherein the target bit rate is less than or equal to the current bit rate.

26. An electronic device, comprising:

at least one processor; and
at least one memory configured to store instructions executable by the at least one processor;
wherein the at least one processor is configured to execute the instructions to perform the following steps:

receiving a media frame in a media stream;
acquiring playback status information of the media stream;
determining a target position according to a position of the media frame in the media stream in response to that the playback status information meets a bit rate switching condition; and
sending a frame acquiring request to a server based on the target position, wherein the frame acquiring request is used for instructing the server to return media frames starting from the target position in the media stream based on a target bit rate.

27. The electronic device according to claim 26, wherein the playback status information comprises a first cache volume, the bit rate switching condition comprises that the first cache volume is greater than a first cache volume threshold or that the first cache volume is less than a second cache volume threshold, the first cache volume is a current cache volume of the media stream that has been cached but not played, and the second cache volume threshold is less than the first cache volume threshold.

28. The electronic device according to claim 26, wherein the playback status information comprises at least one of freeze information or a frame loss rate in a playback process of the media stream; the freeze information comprises at least one of: the number of freezes within a target time period during a playback of the media stream, a last freeze time or last freeze duration;

the bit rate switching condition comprises any one of:

the number of freezes is greater than a freeze count threshold or the number of freezes is less than a freeze count threshold;

duration between the last freeze time and a current moment is less than an interval threshold and the last freeze duration is greater than a duration threshold, or the duration between the last freeze time and the current moment is greater than an interval threshold and the last freeze duration is less than a duration threshold;

the last freeze duration is greater than a duration threshold, or the last freeze duration is less than a duration threshold;

the frame loss rate is greater than a first frame loss rate threshold;

the frame loss rate is less than a second frame loss rate threshold, wherein the second frame loss rate threshold is less than the first frame loss rate threshold;

the frame loss rate within the target time period is greater than the first frame loss rate threshold; and

the frame loss rate within the target time period is less than the second frame loss rate threshold.

29. The electronic device according to claim 26, wherein the at least one processor is specifically configured to execute the instructions to perform the following step:

sending the frame acquiring request to the server based on the target position in response to that the target bit rate being not equal to a current bit rate.

30. The electronic device according to claim 26, wherein the at least one processor is configured to execute the instructions to perform the following steps:

determining the target bit rate according to the playback status information and a current bit rate in response to that the playback status information meets the bit rate switching condition; and determining the target position according to the position of the media frame in the media stream in response to that the target bit rate being not equal to the current bit rate.

31. The electronic device according to claim 30, wherein the at least one processor is further configured to execute the instructions to perform the following step:

discarding the playback status information in response to that the target bit rate being equal to the current bit rate.

32. The electronic device according to claim 30, wherein the at least one processor is further configured to execute the instructions to perform the following step:

determining a position of a first media frame in a target media frame group as the target position in response to that the target bit rate being not equal to the current bit rate, wherein the target media frame group is a media frame group in which the media frame is located.

33. The electronic device according to claim 30, wherein the at least one processor is specifically configured to execute the instructions to perform the following steps:

acquiring a plurality of candidate bit rates; acquiring a second cache volume corresponding to each candidate bit rate according to a relationship between the plurality of candidate bit rates and the current bit rate, the playback status information, and a position of the media frame of the media stream in a target media frame group, wherein the target media frame group is a media frame group in which the media frame is located; and determining the target bit rate from the plurality of candidate bit rates according to a relationship between the second cache volume corresponding to each candidate bit rate and the first cache volume threshold or the second cache volume threshold;

wherein the second cache volume corresponding to each candidate bit rate is a cache volume of the media stream that has been cached but not played at the end of transmission of the target media frame group, after a bit rate is switched to the candidate bit rate.

34. The electronic device according to claim 33, wherein the at least one processor is specifically configured to execute the instructions to perform the following steps:

acquiring a cache increment for the media stream at the end of transmission of the target media frame group according to the position of the media frame of the media stream in the target media frame group;

determining a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates; and

acquiring the second cache volume corresponding to each candidate bit rate according to the first cache volume in the playback status information, the cache increment, and the playback volume, wherein the first cache volume is a current cache volume of the media stream that has been cached but not played.

35. The electronic device according to claim 34, wherein the at least one processor is specifically configured to execute the instructions to perform the following steps:

determining a cache position for continuing to cache the target media frame group according to the relationship between the plurality of candidate bit rates and the current bit rate;

acquiring current network status information; and

determining the playback volume of the media stream in the target cache process according to the current network status information, the cache position, a length of the target media frame group and the plurality of candidate bit rates.

36. The electronic device according to claim 35, wherein the cache position is a position of a media frame next to the media frame in response to that any candidate bit rate being equal to the current bit rate; or the cache position is a position of a first media frame of the target media frame group in response to that any candidate bit rate being not equal to the current bit rate.

37. The electronic device according to claim 33, wherein the current first cache volume of the media stream that has been cached but not played is greater than the first cache volume threshold; and the at least one processor is specifically configured to execute the instructions to perform the following step:

determining, in response to that at least one second cache volume in the second cache volumes corresponding to the plurality of candidate bit rates being greater than the first cache volume threshold, a candidate bit rate corresponding to a maximum of the at least one second cache volume as the target bit rate, wherein the target bit rate is greater than or equal to the current bit rate; or

determining the current bit rate as the target bit rate in response to that no second cache volume in the second cache volumes corresponding to the plurality of candidate bit rates being greater than the first cache volume threshold, wherein the target bit rate is greater than or equal to the current bit rate.

38. The electronic device according to claim 33, wherein the current first cache volume of the media stream that has been cached but not played is less than the second cache volume threshold; and the at least one processor is specifically configured to execute the instructions to perform the following step:

determining, in response to that at least one second cache volume in the second cache volumes corresponding to the plurality of candidate bit rates being greater than the second cache volume threshold, a candidate bit rate corresponding to a maximum of the at least one second cache volume as the target bit rate, wherein the target bit rate is less than or equal to the current bit rate; or

determining a candidate bit rate corresponding to a maximum second cache volume in the second cache volumes corresponding to the plurality of candidate bit rates as the target bit rate in response to that no second cache volume in the second cache volumes corresponding to the plurality of candidate bit rates being greater than the second cache volume threshold, wherein the target bit rate is less than or equal to the current bit rate.

39. An electronic device, comprising:

at least one processor; and

at least one memory configured to store instructions executable by the at least one processor;

wherein the at least one processor is configured to execute the instructions to perform the following steps:

sending a media frame in a media stream;

acquiring playback status information of the media stream from a terminal;

determining a target position according to a position of the media frame in the media stream in response to that the playback status information meets a bit rate switching condition; and

sending media frames starting from the target position in the media stream to the terminal based on the target position and a target bit rate.

40. The electronic device according to claim 39, wherein the playback status information comprises a first cache volume, and the first cache volume is a current cache volume of the media stream that has been cached but not played; the bit rate switching condition comprises that the first cache volume is greater than a first cache volume threshold or that the first cache volume is less than a second cache volume threshold, wherein the second cache volume threshold is less than the first cache volume threshold.

41. The electronic device according to claim 39, wherein the playback status information comprises at least one of freeze information or a frame loss rate in a playback process of the media stream; the freeze information comprises at least one of: the number of freezes within a target time period during a playback of the media stream, a last freeze time or last freeze duration;

the bit rate switching condition comprises any one of:

the number of freezes is greater than a freeze count threshold or the number of freezes is less than a freeze count threshold;
duration between the last freeze time and a current moment is less than an interval threshold and the last freeze duration is greater than a duration threshold, or the duration between the last freeze time and the current moment is greater than an interval threshold and the last freeze duration is less than a duration threshold;
the last freeze duration is greater than a duration threshold, or the last freeze duration is less than a duration threshold;
the frame loss rate is greater than a first frame loss rate threshold;
the frame loss rate is less than a second frame loss rate threshold, wherein the second frame loss rate threshold is less than the first frame loss rate threshold;
the frame loss rate within the target time period is greater than the first frame loss rate threshold; and
the frame loss rate within the target time period is less than the second frame loss rate threshold.

42. The electronic device according to claim 39, wherein the at least one processor is specifically configured to execute the instructions to perform the following steps:

determining the target bit rate according to the playback status information and a current bit rate in response to that the playback status information meets the bit rate switching condition; and
determining the target position according to the position of the media frame in the media stream in response to that the target bit rate being not equal to the current bit rate.

43. The electronic device according to claim 42, wherein the at least one processor is further configured to execute the instructions to perform the following step:

continuing to transmit a media frame next to the media frame to the terminal based on the current bit rate in response to that the target bit rate being equal to the current bit rate.

44. The electronic device according to claim 42, wherein the at least one processor is specifically configured to execute the instructions to perform the following step:

determining a position of a first media frame in a target media frame group as the target position in response to that the target bit rate being not equal to the current bit rate, wherein the target media frame group is a media frame group in which the media frame is located.

45. The electronic device according to claim 42, wherein the at least one processor is specifically configured to execute the instructions to perform the following steps:

acquiring a plurality of candidate bit rates;
acquiring a second cache volume corresponding to each candidate bit rate according to a relationship between the plurality of candidate bit rates and the current bit rate, the playback status information, and a position of the media frame of the media stream in a target media frame group, wherein the target media frame group is a media frame group in which the media frame is located; and
determining the target bit rate from the plurality of candidate bit rates according to a relationship between the second cache volume corresponding to each candidate bit rate and the first cache volume threshold or the second cache volume threshold;
wherein the second cache volume corresponding to each candidate bit rate is a cache volume of the media stream that has been cached but not played at the end of transmission of the target media frame group, after a bit rate is switched to the candidate bit rate.

46. The electronic device according to claim 45, wherein the at least one processor is specifically configured to execute the instructions to perform the following steps:

acquiring a cache increment for the media stream at the end of transmission of the target media frame group according to the position of the media frame of the media stream in the target media frame group;

determining a playback volume of the media stream in a target cache process according to a cache position corresponding to the relationship between the plurality of candidate bit rates and the current bit rate, wherein the cache position is a cache position for continuing to cache the target media frame group, and the target cache process is a process from a current moment to the end of transmission of the target media frame group based on the plurality of candidate bit rates; and

acquiring the second cache volume corresponding to each candidate bit rate according to the first cache volume in the playback status information, the cache increment, and the playback volume, wherein the first cache volume is a current cache volume of the media stream that has been cached but not played.

47. The electronic device according to claim 46, wherein the at least one processor is specifically configured to execute the instructions to perform the following steps:

determining a cache position for continuing to cache the target media frame group according to the relationship between the plurality of candidate bit rates and the current bit rate;

acquiring current network status information; and

determining the playback volume of the media stream in the target cache process according to the current network status information, the cache position, a length of the target media frame group and the plurality of candidate bit rates.

48. The electronic device according to claim 47, wherein the cache position is a position of a media frame next to the media frame in response to that any candidate bit rate being equal to the current bit rate; or the cache position is a position of a first media frame of the target media frame group in response to that any candidate bit rate being not equal to the current bit rate.

49. The electronic device according to claim 45, wherein the current first cache volume of the media stream that has been cached but not played is greater than the first cache volume threshold; and the at least one processor is specifically configured to execute the instructions to perform the following step:

determining, in response to that at least one second cache volume in the second cache volumes corresponding to the plurality of candidate bit rates being greater than the first cache volume threshold, a candidate bit rate corresponding to a maximum of the at least one second cache volume as the target bit rate, wherein the target bit rate is greater than or equal to the current bit rate; or

determining the current bit rate as the target bit rate in response to that no second cache volume in the second cache volumes corresponding to the plurality of candidate bit rates being greater than the first cache volume threshold, wherein the target bit rate is greater than or equal to the current bit rate.

50. The electronic device according to claim 45, wherein the current first cache volume of the media stream that has been cached but not played is less than the second cache volume threshold; and the at least one processor is specifically configured to execute the instructions to perform the following step:

determining, in response to that at least one second cache volume in the second cache volumes corresponding to the plurality of candidate bit rates being greater than the second cache volume threshold, a candidate bit rate corresponding to a maximum of the at least one second cache volume as the target bit rate, wherein the target bit rate is less than or equal to the current bit rate; or

determining a candidate bit rate corresponding to a maximum second cache volume in the second cache volumes corresponding to the plurality of candidate bit rates as the target bit rate in response to that no second cache volume in the second cache volumes corresponding to the plurality of candidate bit rates being greater than the second cache volume threshold, wherein the target bit rate is less than or equal to the current bit rate.

51. A storage medium, wherein when instructions in the storage medium are executed by a processor of an electronic device, the electronic device is caused to perform the following steps:

receiving a media frame in a media stream;

acquiring playback status information of the media stream;

determining a target position according to a position of the media frame in the media stream in response to that the playback status information meets a bit rate switching condition; and

sending a frame acquiring request to a server based on the target position, wherein the frame acquiring request is used for instructing the server to return media frames starting from the target position in the media stream based on a target bit rate.

52. A storage medium, wherein when instructions in the storage medium are executed by a processor of an electronic device, the electronic device is caused to perform the following steps:

> sending a media frame in a media stream;
> acquiring playback status information of the media stream from a terminal;
> determining a target position according to a position of the media frame in the media stream in response to that the playback status information meets a bit rate switching condition; and
> sending media frames starting from the target position in the media stream to the terminal based on the target position and a target bit rate.

**FIG. 1**

| | |
|---|---|
| Receiveing, by a terminal, a media frame in a media stream | S21 |
| Acquiring, by the terminal, playback status information of the media stream | S22 |
| Determining, by the terminal, a target position according to a position of the media frame in the media stream in response to that the playback status information meets a bit rate switching condition | S23 |
| Sending, by the terminal, a frame acquiring request to a server based on the target position, wherein the frame acquiring request is used for instructing the server to return media frames starting from the target position in the media stream based on a target bit rate | S24 |

**FIG. 2**

Sending, by a server, a media frame in a media stream ⌐S31

Acquiring, by the server, playback status information of the media stream from a terminal ⌐S32

Determining, by the server, a target position according to a position of the media frame in the media stream in response to that the playback status information meets a bit rate switching condition ⌐S33

Sending, by the server, media frames starting from the target position in the media stream to the terminal based on the target position and a target bit rate ⌐S34

**FIG. 3**

| Server | Terminal |
|---|---|

S40. Sending, by the server, a media frame in a media stream

S41. Receiving, by the terminal, the media frame in the media stream

S42. Acquiring, by the terminal, playback status information of the media stream

S43. Determining, by the terminal, a target bit rate according to the playback status information and a current bit rate in response to that the playback status information meets a bit rate switching condition

S44. Determining, by the terminal, a target position according to a position of the media frame in the media stream in response to that the playback status information meets the bit rate switching condition

S45. Sending, by the terminal, a frame acquiring request to the server based on the target bit rate and the target position

S46. Sending, by the server, media frames starting from the target position in the media stream to the terminal based on the target bit rate and the target position

**FIG. 4**

12000  11000  10000  9000  8000  7000  6000  5000  4000  3000  2000  1000

**FIG. 5**

Sending, by a server, a media frame in a media stream — S60

Acquiring, by the server, playback status information of the media stream from a terminal — S61

Determining, by the server, a target bit rate according to the playback status information and a current bit rate in response to that the playback status information meets a bit rate switching condition — S62

Determining, by the server, a target position according to a position of the media frame in the media stream in response to that the playback status information meets the bit rate switching condition — S63

Sending, by the server, media frames starting from the target position in the media stream to the terminal based on the target bit rate and the target position — S64

**FIG. 6**

700

**Apparatus for switching a bit rate**

Acquiring module ~ 701

Determining module ~ 702

Sending module ~ 703

**FIG. 7**

800

**Apparatus for switching a bit rate**

Acquiring module ~ 801

Determining module ~ 802

Sending module ~ 803

**FIG. 8**

FIG. 9

1000

Server

| Processor | 1001 |

| Memory | 1002 |

**FIG. 10**

## INTERNATIONAL SEARCH REPORT

International application No.

**PCT/CN2020/133863**

### A. CLASSIFICATION OF SUBJECT MATTER

H04N 21/845(2011.01)i;  H04N 21/4402(2011.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, JPTXT, CNKI, IEEE, GOOGLE: 码率, 帧, 切换, 调整, 缓存, 缓冲, 卡顿, 丢帧, 丢包, 阈值, 候选, 位置, 时间戳, video, code, rate, frame, switch, adjust, buffer, lag, candidate, position, timestamp

### C. DOCUMENTS CONSIDERED TO BE RELEVANT

| Category* | Citation of document, with indication, where appropriate, of the relevant passages | Relevant to claim No. |
|---|---|---|
| X | CN 110267100 A (BEIJING DAJIA INTERCONNECTION INFORMATION TECHNOLOGY CO., LTD.) 20 September 2019 (2019-09-20) description, paragraphs [0072]-[0134], [0159]-[0173] | 1-7, 14-19, 26-32, 39-44, 51-52 |
| X | CN 110290402 A (TENCENT TECHNOLOGY SHENZHEN CO., LTD.) 27 September 2019 (2019-09-27) description, paragraphs [0027]-[0054], [0079]-[0096] | 1-7, 14-19, 26-32, 39-44, 51-52 |
| A | CN 110636346 A (BEIJING DAJIA INTERCONNECTION INFORMATION TECHNOLOGY CO., LTD.) 31 December 2019 (2019-12-31) entire document | 1-52 |
| A | CN 108769826 A (GUANGZHOU KUGOU COMPUTER TECHNOLOGY CO., LTD.) 06 November 2018 (2018-11-06) entire document | 1-52 |
| A | US 2007076816 A1 (IPR LICENSING INC.) 05 April 2007 (2007-04-05) entire document | 1-52 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **03 March 2021** | **10 March 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

| INTERNATIONAL SEARCH REPORT | | | International application No. |
|---|---|---|---|
| Information on patent family members | | | **PCT/CN2020/133863** |

| Patent document cited in search report | | | Publication date (day/month/year) | Patent family member(s) | | | Publication date (day/month/year) |
|---|---|---|---|---|---|---|---|
| CN | 110267100 | A | 20 September 2019 | None | | | |
| CN | 110290402 | A | 27 September 2019 | None | | | |
| CN | 110636346 | A | 31 December 2019 | None | | | |
| CN | 108769826 | A | 06 November 2018 | None | | | |
| US | 2007076816 | A1 | 05 April 2007 | US | 6973140 | B2 | 06 December 2005 |
| | | | | US | 7502424 | B2 | 10 March 2009 |
| | | | | EP | 1229679 | A3 | 18 September 2002 |
| | | | | EP | 1229679 | A2 | 07 August 2002 |
| | | | | US | 2015222392 | A1 | 06 August 2015 |
| | | | | US | 2012250798 | A1 | 04 October 2012 |
| | | | | US | 9369235 | B2 | 14 June 2016 |
| | | | | US | 8964909 | B2 | 24 February 2015 |
| | | | | US | 2001048709 | A1 | 06 December 2001 |
| | | | | US | 2009135950 | A1 | 28 May 2009 |
| | | | | US | 7145964 | B2 | 05 December 2006 |
| | | | | US | 2006062326 | A1 | 23 March 2006 |
| | | | | US | 8204140 | B2 | 19 June 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010055756